# EUROPEAN PATENT APPLICATION

(11) **EP 4 506 274 A1**
(43) Date of publication of application: **12.02.2025**
(21) Application number: 23809072.4
(22) Date of filing: 21.06.2023
(51) Int. Cl.: B65D 19/44, B65D 85/88, H01M 50/267

(54) **TRAY, BATTERY PROCESSING APPARATUS AND BATTERY PRODUCTION LINE**

(71) Applicant: Contemporary Amperex Technology (Hong Kong) Limited, Central, Central And Western District (HK)
(72) Inventor: ZHANG, Ben, Fujian 352100 (CN); LIAO, Shunlin, Fujian 352100 (CN); WU, Ying, Fujian 352100 (CN)
(74) Representative: Laufhütte, Dieter
(86) International application number: PCT/CN2023/101918
(87) International publication number: WO 2024/259680

(57) **Abstract**

This application discloses a pallet (100), a battery processing device (1000), and a battery production line. The battery production line includes the battery processing device (1000), and the battery processing device (1000) includes the pallet (100). The pallet (100) includes a bottom support (10) and a limiting structure (20). The limiting structure (20) is disposed on the bottom support (10) and encloses a plurality of limiting spaces (201); the limiting spaces (201) are located on a side of the bottom support (10) in a first direction (Z) and are used for limiting batteries; and the plurality of limiting spaces (201) have different projections in the first direction (Z). **In** this way, the plurality of limiting spaces (201) can be used for limiting batteries of a plurality of different models separately, that is, the pallet (100) can be applicable to batteries of a plurality of different models, improving the compatibility and versatility of the pallet (100).

## Description

### TECHNICAL FIELD

This application relates to the field of battery technologies, specifically to a pallet, a battery processing device, and a battery production line.

### BACKGROUND

In the process of battery processing, it is usually necessary to limit a battery to a pallet for battery transportation using the pallet.

In some cases, the pallet has low compatibility and is generally capable of limiting only batteries of a single model, making it difficult to limit batteries of other models.

### SUMMARY

In view of the above problems, embodiments of the present application provide a pallet, a battery processing device, and a battery production line to improve the low compatibility of the pallet.

Embodiments of this application utilize the following technical solutions:

According to a first aspect, an embodiment of this application provides a pallet including:
a bottom support; and
a limiting structure disposed on the bottom support and enclosing a plurality of limiting spaces; where the limiting spaces are located on a side of the bottom support in a first direction and are used for limiting batteries; and the plurality of limiting spaces have different projections in the first direction.

According to the pallet provided in this embodiment of this application, the limiting structure encloses a plurality of limiting spaces located on a side of the bottom support in the first direction, and the plurality of limiting spaces have different projections in the first direction, such that the plurality of limiting spaces can be used for limiting batteries of a plurality of different models, that is, the pallet can be applicable to batteries of a plurality of different models, thereby improving the compatibility and versatility of the pallet.

In some embodiments, at least some of the limiting spaces are located on a same side of the bottom support in the first direction and projections in the first direction partially overlap.

In this way, the limiting structure can be used to selectively limit a battery of a corresponding model through the corresponding limiting space. In addition, the limiting structure has a smaller size in a direction perpendicular to the first direction, such that the size of the pallet can be reduced.

In some embodiments, the plurality of limiting spaces are sequentially arranged in communication along the first direction.

With this arrangement, the distribution of the plurality of limiting spaces on the limiting structure is clear, facilitating the placement of a battery in a limiting space of a corresponding model, so that the efficiency of the pallet in limiting batteries can be improved. Additionally, the structure of the limiting structure is simple.

In some embodiments, at least two of the limiting spaces partially overlap in a cross section parallel to the first direction.

This arrangement can reduce the size of the pallet in the first direction, facilitating the design of a compact pallet.

In some embodiments, two of the limiting spaces are respectively a first limiting space and a second limiting space; in a second direction, size of the first limiting space is smaller than size of the second limiting space; and the second direction intersects with the first direction.

This allows the first limiting space to limit a battery with a different size in the second direction compared to a battery accommodated by the second limiting space. That is, the limiting structures can accommodate batteries with different sizes in the second direction.

In some embodiments, in a third direction, size of the first limiting space is smaller than size of the second limiting space; where the third direction intersects with both the first direction and the second direction, and the first direction, the second direction, and the third direction are not simultaneously located in a same plane.

With this arrangement, the limiting structure can be used to accommodate batteries that have different sizes in both the second direction and the third direction.

In some embodiments, the limiting structure includes at least one set of limiting assemblies, and the limiting assemblies include a first limiting member and a second limiting member spaced apart on the bottom support along the second direction, and a third limiting member and a fourth limiting member spaced apart on the bottom support along the third direction, where the first limiting member, the second limiting member, the third limiting member, and the fourth limiting member enclose the plurality of limiting spaces; and the first direction intersects with the second direction, the first direction intersects with the third direction, the second direction intersects with the third direction, and the first direction, the second direction, and the third direction are not simultaneously located in a same plane.

With the first limiting member, the second limiting member, the third limiting member, and the fourth limiting member provided, the limiting assembly encloses a plurality of limiting spaces, so that the pallet can be applicable to batteries of a plurality of different models, thereby improving the compatibility and versatility of the pallet.

In some embodiments, the first limiting member includes a plurality of first sub-blocks disposed sequentially along the second direction, and in a direction of the first sub-blocks leaving the second limiting member in the second direction, the plurality of first sub-blocks have gradually increasing sizes in the first direction; and each of the first sub-blocks is used to enclose the limiting space together with the second limiting member, and the limiting spaces corresponding to the plurality of first sub-blocks are sequentially arranged in communication along the first direction.

In this way, the plurality of limiting spaces defined by the first limiting member and the second limiting member can be used for limiting batteries of different sizes in the second direction. In addition, it is also convenient for the operation of placing batteries into the limiting spaces.

In some embodiments, the plurality of first sub-blocks are spaced apart along the second direction; or the plurality of first sub-blocks are sequentially connected along the second direction to form a stepped structure.

This arrangement can reduce size of the first limiting member in the second direction or allow the plurality of first sub-blocks of the first limiting member to be arranged separately, thereby increasing the flexibility in the arrangement of the first limiting member.

In some embodiments, the second limiting member includes a plurality of second sub-blocks distributed sequentially along the second direction, where in a direction of the second sub-blocks leaving the first sub-blocks along the second direction, the plurality of second sub-blocks have gradually increasing sizes in the first direction, and each of the second sub-blocks is used to enclose the limiting space together with the corresponding first sub-block.

With this arrangement, the plurality of first sub-blocks and the plurality of second sub-blocks are provided in correspondence, facilitating the formation of the plurality of limiting spaces sequentially connected along the first direction. In addition, the plurality of limiting spaces have different sizes in the second direction, so as to be suitable for batteries with different sizes in the second direction. In addition, it is also convenient for the operation of placing batteries into the limiting spaces.

In some embodiments, the plurality of second sub-blocks are spaced apart along the second direction; or the plurality of second sub-blocks are sequentially connected along the second direction to form a stepped structure.

This arrangement can reduce the size of the second limiting member in the second direction or allows the plurality of second sub-blocks of the second limiting member to be arranged separately, thereby increasing the flexibility in the arrangement of the second limiting member.

In some embodiments, the third limiting member includes a plurality of third sub-blocks sequentially distributed along the third direction, where in a direction of the third sub-blocks leaving the fourth limiting member in the third direction, the plurality of third sub-blocks have gradually increasing sizes in the first direction; and each of the third sub-blocks is used to enclose the limiting space together with the fourth limiting member, and the limiting spaces corresponding to the plurality of third sub-blocks are sequentially arranged in communication along the first direction.

In this way, the plurality of limiting spaces defined by the third limiting member and the fourth limiting member can be used for limiting batteries of different sizes separately along the third direction. In addition, it is also convenient for the operation of placing batteries into the limiting spaces.

In some embodiments, the plurality of third sub-blocks are spaced apart along the third direction; or the plurality of third sub-blocks are sequentially connected along the third direction to form a stepped structure.

This arrangement can reduce the size of the third limiting member in the third direction or allow the plurality of third sub-blocks of the third limiting member to be arranged separately, thereby increasing the flexibility in the arrangement of the third limiting member.

In some embodiments, the fourth limiting member includes a plurality of fourth sub-blocks distributed sequentially along the third direction, where in a direction of the fourth sub-blocks leaving the third sub-blocks in the third direction, the plurality of fourth sub-blocks have gradually increasing sizes in the first direction, and each of the fourth sub-blocks is used to enclose the limiting space together with the corresponding third sub-block.

With this arrangement, the plurality of third sub-blocks and the plurality of fourth sub-blocks are provided in correspondence, facilitating the formation of the plurality of limiting spaces sequentially connected along the first direction. In addition, the plurality of limiting spaces have different sizes in the third direction, so as to be suitable for batteries with different sizes in the third direction. In addition, it is also convenient for the operation of placing batteries into the limiting spaces.

In some embodiments, the plurality of fourth sub-blocks are spaced apart along the third direction; or the plurality of fourth sub-blocks are sequentially connected along the third direction to form a stepped structure.

This arrangement can reduce the size of the fourth limiting member in the third direction or allow the plurality of fourth sub-blocks of the fourth limiting member to be arranged separately, thereby increasing the flexibility in the arrangement of the fourth limiting member.

In some embodiments, at least one of the limiting spaces is enclosed collectively by the first sub-block, the second limiting member, the third sub-block, and the fourth limiting member.

With the above-described technical solution, the at least one limiting space can limit a battery along both the second direction and the third direction.

In some embodiments, the first sub-blocks enclose the limiting spaces together with the third sub-blocks, the second limiting members, and the fourth limiting members.

With this arrangement, the limiting structure can be used to accommodate batteries of different models with different sizes in both the second direction and the third direction, greatly improving the compatibility and versatility of the pallet.

In some embodiments, the plurality of first sub-blocks each enclose the limiting space together with a same third sub-block.

With this arrangement, the plurality of limiting spaces formed by the limiting structure can be used for accommodating batteries of different models with different sizes in the second direction, and can also be used for accommodating batteries of different models with different sizes in the third direction, greatly improving the compatibility and versatility of the pallet.

In some embodiments, at least one of the limiting spaces corresponding to the first sub-blocks and any one of the limiting spaces corresponding to the third sub-blocks are different limiting spaces.

With this arrangement, the at least one first sub-block and the third sub-block respectively define different limiting spaces, that is, the limiting space corresponding to the at least one first sub-block and the limiting space defined by the third sub-block are different limiting spaces. In this way, the limiting structure is capable of defining a plurality of different limiting spaces for accommodating batteries of more models.

In some embodiments, the limiting assembly further includes a fifth limiting member disposed between the first sub-block and the third sub-block and a sixth limiting member disposed between the second limiting member and the fourth limiting member, where the fifth limiting member and the fourth limiting member are configured to enclose the limiting spaces together with the first sub-block and the second limiting member and are further configured to enclose the limiting spaces together with the third sub-block and the fourth limiting member.

With the above technical solution, both a limiting space corresponding to one of the first sub-blocks and a limiting space corresponding to any one of the third sub-blocks can limit batteries in both the second direction and the third direction, maintaining stable limiting of the batteries.

In some embodiments, the limiting structure further includes a supporting member disposed on the bottom support, and the supporting member is configured to support the workpiece along the first direction.

With this arrangement, the supporting member can support the battery along the first direction, maintaining stable limiting of the battery on the pallet.

In some embodiments, the first limiting member, the second limiting member, the third limiting member, and the fourth limiting member are sequentially connected along the first direction; or
the first limiting member is connected to the third limiting member and/or the second limiting member is connected to the fourth limiting member.

With this arrangement, the limiting structure has a substantially annular structure, or the limiting structure can avoid a transporting apparatus configured to transport batteries, facilitating limiting of the battery on the pallet.

In some embodiments, the first limiting member is provided with an avoidance groove on a side facing the second limiting member in the second direction, and the second limiting member is provided with an avoidance groove on a side facing the first limiting member in the second direction; or the third limiting member is provided with an avoidance groove on a side facing the fourth limiting member in the third direction, and the fourth limiting member is provided with an avoidance groove on a side facing the third limiting member in the third direction.

With this arrangement, under a condition that at least a portion of a battery is limited in the avoidance groove, a pole or another component of the battery can be avoided in the avoidance groove.

In some embodiments, the limiting structure is a flexible material member and/or an elastic material member.

With this arrangement, the problem of battery damage can be alleviated.

According to a second aspect, an embodiment of this application provides a battery processing device including a pallet.

The battery processing device provided in this embodiment of this application also has the advantage of being able to accommodate batteries of a plurality of different models by using the pallet.

According to a third aspect, an embodiment of this application provides a battery production line including a battery processing device.

The battery production line provided in this embodiment of this application also has the advantage of being able to accommodate batteries of a plurality of different models by using the foregoing battery processing device.

The foregoing description is merely an overview of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or exemplary techniques. Apparently, the accompanying drawings in the following description show only some embodiments of this application, and persons of ordinary skill in the art may still derive other drawings from these accompanying drawings without creative efforts.
FIG. 1 is a schematic diagram of a battery processing device according to some embodiments of this application;
FIG. 2 is a three-dimensional structural diagram of a pallet according to some embodiments of this application;
FIG. 3 is a schematic diagram of a portion of the pallet shown in FIG.2;
FIG. 4 is a cross-sectional view along A-A in FIG. 3;
FIG. 5 is a top view of the pallet shown in FIG. 3;
FIG. 6 is a partial three-dimensional schematic diagram of a pallet according to some other embodiments of this application;
FIG. 7 is a cross-sectional view along B-B in FIG. 6;
FIG. 8 is a cross-sectional view along C-C in FIG. 6;
FIG. 9 is a partial three-dimensional schematic diagram of a pallet according to still some other embodiments of this application;
FIG. 10 is a cross-sectional view along D-D in FIG. 9;
FIG. 11 is a top view of FIG. 9;
FIG. 12 is an enlarged view at E in FIG. 3;
FIG. 13 is an enlarged view at F in FIG. 3;
FIG. 14 is an enlarged view at G in FIG. 6;
FIG. 15 is an enlarged view at H in FIG. 6;
FIG. 16 is a partial top view of a pallet according to yet some other embodiments of this application;
FIG. 17 is a cross-sectional view along I-I in FIG. 16; and
FIG. 18 is a cross-sectional view along J-J in FIG. 16.

Reference signs in the accompanying drawings:
1000. battery processing device; 100. pallet; 200. adhesive applying apparatus; 10. bottom support; 20. limiting structure; 201. limiting space; 201a. first limiting space; 201b. second limiting space; 201c. third limiting space; 201d. fourth limiting space; 202. avoidance groove; 21. limiting assembly; 211. first limiting member; 2111. first sub-block; 2111a. 1st sub-block; 2111b. 2nd first sub-block; 212. second limiting member; 2121. second sub-block; 213. third limiting member; 2131. third sub-block; 2131a. 1st third sub-block; 2131b. 2nd third sub-block; 214. fourth limiting member; 2141. fourth sub-block; 215. fifth limiting member; 216. sixth limiting member; 22. supporting member; Z. first direction; Y second direction; and X. third direction.

### DESCRIPTION OF EMBODIMENTS

The embodiments of this application are described in detail below. Examples of the embodiments are shown in the accompanying drawings, and the same or similar reference signs indicate the same or similar components or components with the same or similar functions. The embodiments described below with reference to the drawings are illustrative and merely for explaining this application. They should not be construed as limitations on this application.

In the descriptions of this application, it should be understood that the orientations or positional relationships indicated by the terms "length", "width", "upper", "lower", "front", "rear", "left", "right", "perpendicular", "horizontal", "top", "bottom", "inside", "outside", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

In addition, the terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features.

In the description of this application, "a plurality of" means at least two unless otherwise specifically stated, and "two or more" includes two. Similarly, the term "a plurality of groups" means two or more groups, including two groups.

In the description of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

In the description of this application, the term "and/or" is only an associative relationship for describing associated objects, indicating that three relationships may be present. For example, A and/or B may indicate the following three cases: presence of A, presence of both A and B, and presence of B. In addition, the character "/" in this application generally indicates an "or" relationship between contextually associated objects.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

In the process of battery processing, it is usually necessary to limit a battery to a pallet for battery transportation using the pallet, so that the battery can be transported to a corresponding position for inspection, adhesive application, and other operations.

The pallet includes a bottom support and a limiting structure disposed on the bottom support. The limiting structure defines a limiting space, and the limiting space is used for accommodating and limiting the battery.

In some cases, the pallet has low compatibility and is generally capable of limiting only batteries of a single model, making it difficult to limit batteries of other models. Taking a rectangular battery as an example, the battery has a thickness direction, a length direction, and a width direction. Under a condition that the battery is limited on the pallet, one side of the battery along the thickness direction may face the bottom support, that is, the limiting space may be on a side of the bottom support in the thickness direction of the battery. In addition, in this case, the battery is limited in the limiting space along both the length direction and the width direction. It should be noted that the limiting space has predetermined sizes in the length direction and width direction of the battery, allowing batteries of corresponding models to be accommodated and limited in the limiting spaces. Batteries of different models have different lengths and/or widths, such that the batteries cannot be adaptively accommodated in the limiting space. As a result, the pallet cannot adaptively limit the batteries of such models.

Therefore, to limit and transport batteries of other models, the pallet needs to be modified or replaced with a pallet specifically designed for the corresponding model so that the pallet can be applicable to the batteries of the corresponding models. This inevitably leads to difficulties in battery processing, low efficiency, and high costs.

Based on the above considerations, embodiments of this application provide a pallet, a battery processing device, and a battery production line. A limiting structure encloses a plurality of limiting spaces located on a side of a bottom support in a first direction, and the plurality of limiting spaces have different projections in the first direction, such that the plurality of limiting spaces can be used for limiting batteries of a plurality of different models, that is, the pallet can be applicable to batteries of a plurality of different models, thereby improving the compatibility and versatility of the pallet.

The battery mentioned in the embodiments of this application may be a battery cell or a single physical module that includes one or more battery cells to provide higher voltage and capacity. The battery cell is the smallest unit that stores and outputs electrical energy. Under a condition that a plurality of battery cells are provided, the plurality of battery cells may be connected in series, parallel, or series-parallel through a busbar, where being connected in series-parallel means a combination of series and parallel connections of the plurality of battery cells.

Although the pallet involved in the embodiments of this application is developed based on the problem of poor compatibility between the pallet and the battery that occurs in the battery processing process, its application is not limited to this scenario alone. It can be applied in any situation where limiting is required. It can be understood that the pallet involved in the embodiments of this application can be used for limiting batteries, and can also be used for limiting other workpieces other than batteries.

For ease of description, the embodiments of this application are described mainly in terms of the pallet being used for limiting a battery as an example. For the case where the pallet is used for limiting other workpieces, the same explanation can be given, therefore, it is not necessary to list them one by one.

It should be additionally noted that the pallet used for limiting batteries can be used for transporting batteries as well as for adhesive application, inspection, and other operations performed for the batteries on the pallet.

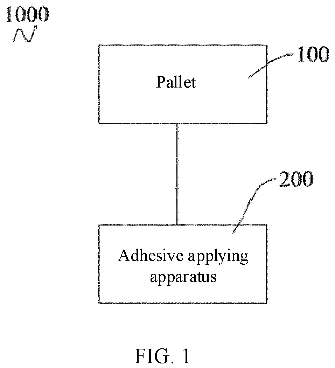

Referring to FIG. 1, FIG. 1 shows a battery processing device 1000 according to some embodiments of this application, the battery processing device 1000 including a pallet 100.

For example, as shown in FIG. 1, the battery processing device 1000 may include an adhesive applying apparatus 200 for applying adhesive to a battery, and the pallet 100 may be used for limiting the battery and transporting the battery to an adhesive application position of the adhesive applying apparatus 200 for adhesive application to the battery.

For example, the battery processing device 1000 may include an inspection apparatus for performing an inspection operation on the battery, and the pallet 100 may be used for limiting the battery and transporting the battery to an inspection position of the inspection apparatus to perform battery inspection.

For example, the battery processing device 1000 may further include a stacking apparatus for stacking battery cells to form a battery, and the pallet 100 may be used for limiting the battery cells of the battery and transporting the battery cells to a stacking position of the stacking apparatus for stacking the battery cells to form a battery.

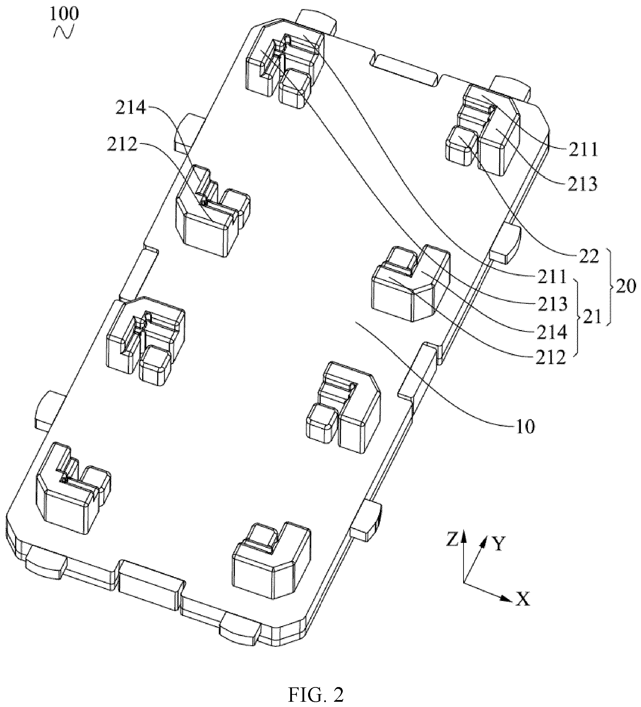

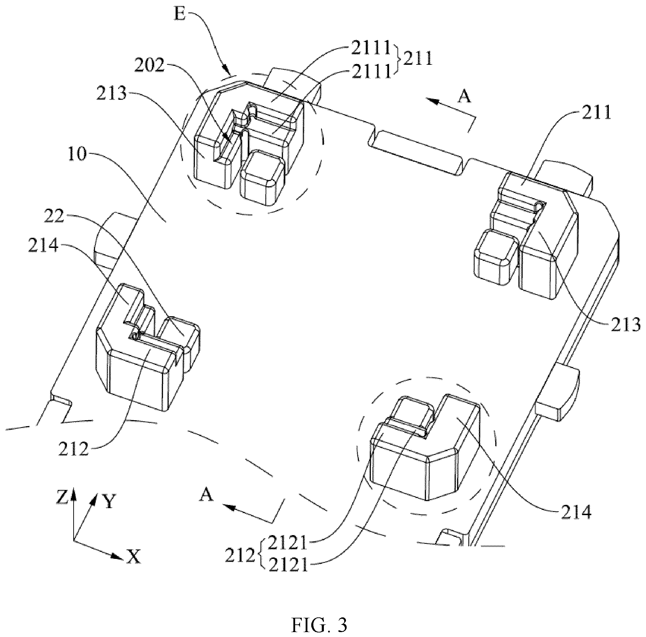

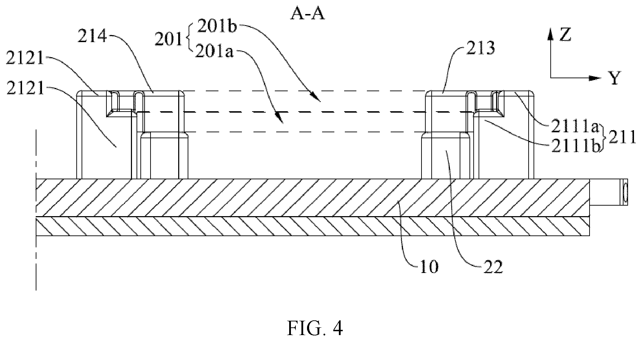

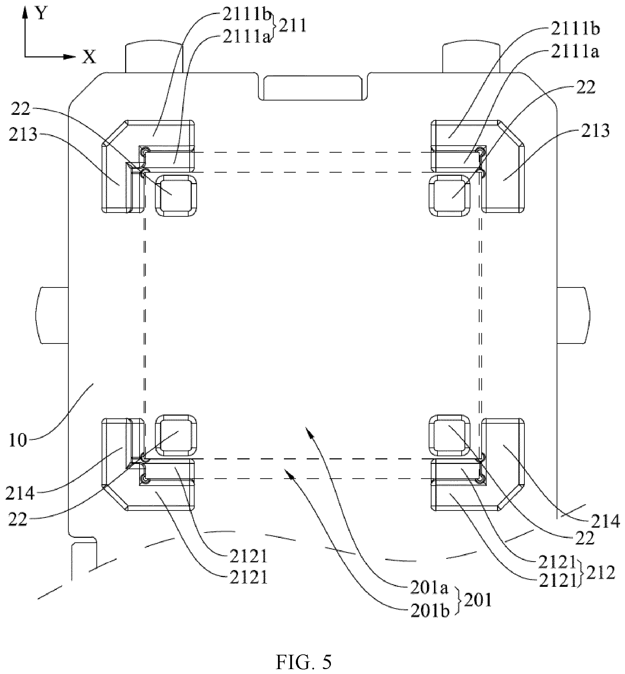

Referring to FIGs. 2 to 5, FIG. 2 is a three-dimensional schematic diagram of the pallet 100 according to some embodiments of this application, FIG. 3 is a partial schematic diagram of FIG. 2, FIG. 4 is a cross-sectional view along A-A of FIG. 3, and FIG. 5 is a top view of FIG. 3, that is, FIG. 5 is a schematic diagram of FIG. 3 along a first direction Z. The pallet 100 according to the embodiments of this application includes a bottom support 10 and a limiting structure 20. The limiting structure 20 is disposed on the bottom support 10 and encloses a plurality of limiting spaces 201. The limiting spaces 201 are located on a side of the bottom support 10 in the first direction Z and are used for limiting batteries. The plurality of limiting spaces 201 have different projections in the first direction Z.

The bottom support 10 is a bottom support portion of the pallet 100 and is mainly used for mounting the limiting structure 20. The bottom support 10 may be a plate-like structure or a structure of another shape.

The first direction Z refers to a direction in which the pallet 100 is capable of accommodating batteries. For example, under a condition that the bottom support 10 is a plate-like structure, the first direction Z may be a thickness direction of the bottom support 10.

The limiting structure 20 refers to a component for limiting batteries. Specifically, the limiting structure 20 encloses the limiting spaces 201, at least a portion of the battery can be located in the limiting spaces 201, achieving the limiting of the battery in the limiting spaces 201 via inner walls of the limiting spaces 201.

In some possible designs, at least a portion of the limiting structure 20 can be located on opposite sides of the limiting spaces 201 in the second direction Y, defining sizes of the limiting spaces 201 in the second direction Y and achieving the limiting of the battery along the second direction Y. In other possible designs, at least a portion of the limiting structure 20 can alternatively be located on opposite sides of the limiting spaces 201 in the third direction X, defining sizes of the limiting spaces 201 in the third direction X and achieving the limiting of the battery along the third direction X. In yet other possible designs, as shown in FIGs. 2 to 5, a portion of the limiting structure 20 can be located on opposite sides of the limiting spaces 201 in the second direction Y, defining sizes of the limiting spaces 201 in the second direction Y, such as the first limiting member 211 and the second limiting member 212 mentioned later; and another portion is located on opposite sides of the limiting spaces 201 in the third direction X, defining sizes of the limiting spaces 201 in the third direction X. This achieves the limiting of the battery along both the second direction Y and the third direction X, such as a third limiting member 213, and a fourth limiting member 214 described below.

A case of at least a portion of the battery being located in the limiting space 201 means that the battery may be completely accommodated in the corresponding limiting space 201 or may be only partially accommodated in the corresponding limiting space 201. In the case of the battery being only partially accommodated in the corresponding limiting space 201, another portion of the battery may be located outside another limiting space 201 or inside the another limiting space 201, but the battery is limited through the corresponding limiting space 201.

As shown in FIGs. 2 to 4, at least a portion of the limiting structure 20 is disposed on a side of the bottom support 10 in the first direction Z. In this way, the limiting space 201 enclosed by the limiting structure 20 may be located on a side of the bottom support 10 in the first direction Z.

The limiting spaces 201 being located on a side of the bottom support 10 in the first direction Z may be that a plurality of limiting spaces 201 are located on a same side of the bottom support 10 in the first direction Z, as shown in FIGs. 2 to 4, or may be that a plurality of limiting spaces 201 are located on opposite sides of the bottom support 10 in the first direction Z.

In some possible designs, projections of the plurality of limiting spaces 201 projected on the bottom support 10 along the first direction Z may partially overlap, as shown in FIG. 5. FIG. 5 is a top view of the pallet 100, showing a perspective along the first direction Z, which is the same as a perspective of projections of the plurality of limiting spaces 201 projected on the bottom support 10 along the first direction Z. Alternatively, in other possible designs, projections of the plurality of limiting spaces 201 projected on the bottom support 10 along the first direction Z may be staggered, for example, staggered along the second direction Y or the third direction X, or staggered along a direction that intersects with each of the first direction Z, the second direction Y, and the third direction X. Alternatively, in yet other possible designs, some of the plurality of limiting spaces 201 are provided with overlapping projections projected on the bottom support 10 along the first direction Z, and some of the limiting spaces 201 are provided with staggered projections projected on the bottom support 10 along the first direction Z.

A plurality of limiting spaces 201 having different projections in the first direction Z means that for any two limiting spaces 201, a projection of one limiting space 201 projected on the bottom support 10 along the first direction Z is different from a projection of the other limiting space 201 projected on the bottom support 10 along the first direction Z. Projections being different means that sizes in the second direction Y are different or sizes in the third direction X are different. Based on this, each limiting space 201 may be used for adaptively limiting a battery of a corresponding model.

For example, as shown in FIGs. 4 and 5, the limiting structure 20 encloses two limiting spaces 201, the two limiting spaces 201 being a first limiting space 201a and a second limiting space 201b. Dashed lines are used in both FIGs. 4 and 5 to delineate the first limiting space 201a and the second limiting space 201b. Size of the first limiting space 201a in the second direction Y is smaller than size of the second limiting space 201b in the second direction Y, making the first limiting space 201a different from the second limiting space 201b.

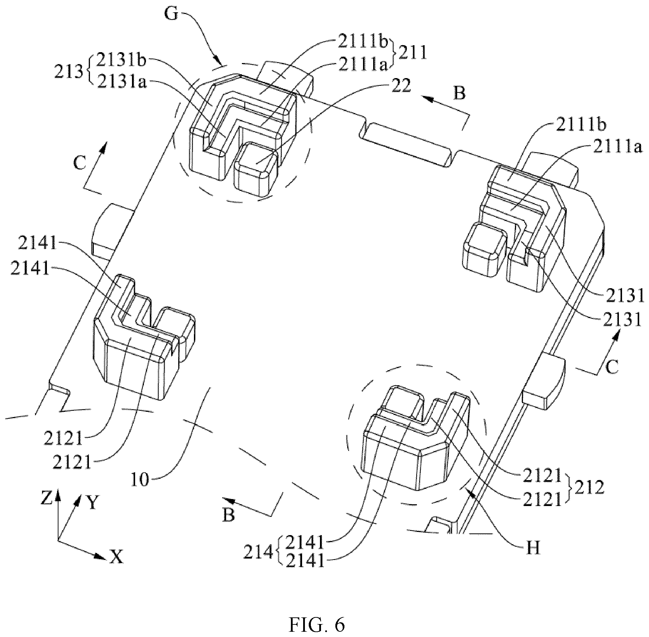

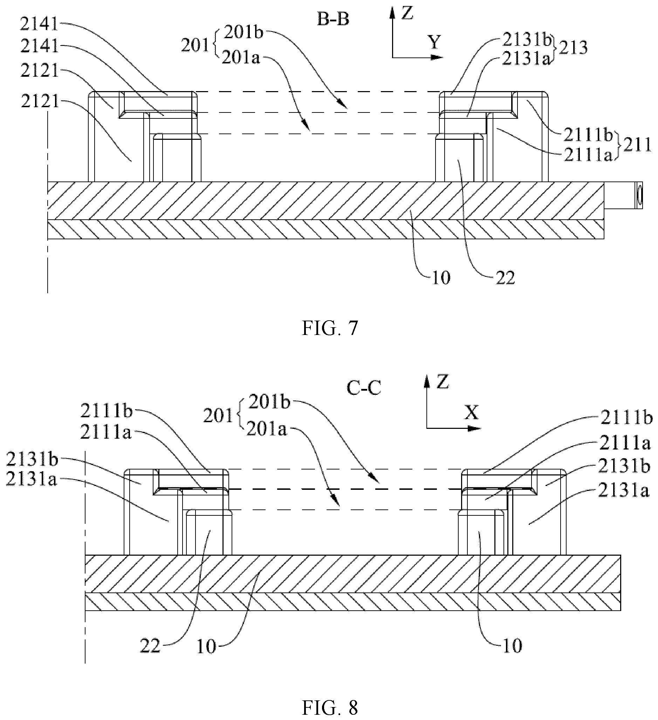

For example, as shown in FIGs. 6 to 8, FIG. 6 is a partial structural diagram of the pallet 100 according to some other embodiments of this application, FIG. 7 is a cross-sectional view along B-B in FIG. 6, and FIG. 8 is a cross-sectional view along C-C in FIG. 6. Two of the limiting spaces 201 enclosed by the limiting structure 20 are a first limiting space 201a and a second limiting space 201b. Dashed lines are used in both FIGs. 7 and 8 to delineate the first limiting space 201a and the second limiting space 201b. Size of the first limiting space 201a in the second direction Y is smaller than size of the second limiting space 201b in the second direction Y, and size of the first limiting space 201a in the third direction X is smaller than size of the second limiting space 201b in the third direction X, making the first limiting space 201a different from the second limiting space 201b.

It should also be noted that the plurality of limiting spaces 201 enclosed by the limiting structure 20 can be used for simultaneously limiting batteries of corresponding models or selectively limiting batteries of corresponding models.

The first direction Z intersects with the second direction Y, the first direction Z intersects with the third direction X, and the second direction Y intersects with the third direction X, and the first direction Z, the second direction Y, and the third direction X are not all in a same plane. The first direction Z intersecting with the second direction Y means that the first direction Z and the second direction Y are not parallel, forming an angle greater than 0° and less than 180° between the first direction Z and the second direction Y. The first direction Z and the second direction Y may be perpendicular or non-perpendicular to each other. The first direction Z and the second direction Y can intersect on the same plane or be directions on mutually non-coplanar planes, and a projection of the first direction Z on a plane where the second direction Y is located can intersect with the second direction Y. The same explanation applies to the intersection between the first direction Z and the third direction X and the intersection between the second direction Y and the third direction X, and details are not repeated.

For example, as shown in FIGs. 2 to 8, the first direction Z is perpendicular to the second direction Y, the first direction Z is perpendicular to the third direction X, and the second direction Y is perpendicular to the third direction X.

According to the pallet 100 provided in the embodiments of this application, the limiting structure 20 encloses the plurality of limiting spaces 201 located on a side of the bottom support 10 in the first direction Z, and the plurality of limiting spaces 201 have different projections in the first direction Z. In this way, each limiting space 201 may be used for limiting a battery whose projection in the first direction Z substantially corresponds to that of the limiting space 201. For example, a projection of each limiting space 201 in the first direction Z has a corresponding size in the second direction Y and a corresponding size in the third direction X, making it suitable for batteries with corresponding sizes in the second direction Y and the third direction X. Thus, each limiting space 201 can be used for limiting a battery of a corresponding model. Based on this, a plurality of limiting spaces 201 can be used for separately limiting batteries of different models, making the pallet 100 suitable for batteries of a plurality of different models. Therefore, compared to a pallet 100 that can only limit batteries of a single model, the pallet 100 provided in the embodiments of this application has higher compatibility and versatility.

In addition, in the pallet 100 provided in the embodiments of this application, the limiting structure 20 defines the plurality of limiting spaces 201, improving the compatibility and versatility of the pallet 100. The compatibility and versatility can be improved through a simple design, resulting in lower production costs and broader applicability of the pallet 100.

In some embodiments, reference is made to FIG. 2 in conjunction with other accompanying drawings. The pallet 100 includes a plurality of limiting structures 20, each of the limiting structures 20 may enclose a plurality of limiting spaces 201.

The plurality of limiting structures 20 may be disposed on a same side of the bottom support 10 in the first direction Z or may be disposed on opposite sides of the bottom support 10 in the first direction Z. In addition, the plurality of limiting structures 20 disposed on the same side of the bottom support 10 in the first direction Z may be sequentially arranged along the second direction Y, may be sequentially arranged along the third direction X, may be sequentially arranged along a direction that intersects with each of the first direction Z, the second direction Y, and the third direction X, or may even be arranged in an array or irregularly distributed along a plurality of different directions.

For example, as shown in FIG. 2, the limiting structures 20 are provided as two and are located on a same side of the bottom support 10 in the first direction Z. The two limiting structures 20 are spaced apart along the second direction Y on the bottom support 10.

With this arrangement, the pallet 100 can be used for simultaneously limiting a plurality of batteries.

In some embodiments, reference is made to FIGs. 4 and 5 and FIGs. 7 and 8 in conjunction with other accompanying drawings. At least some of the limiting spaces 201 are located on a same side of the bottom support 10 in the first direction Z, and projections in the first direction Z partially overlap.

In some possible designs, some of the plurality of limiting spaces 201 enclosed by the limiting structures 20 are located on a same side of the bottom support 10 in the first direction Z, and projections of the some limiting spaces 201 located on the same side of the bottom support 10 projected on the bottom support 10 along the first direction Z partially overlap. Alternatively, in other possible designs, as shown in FIGs. 4 and 5 and FIGs. 7 and 8, all of the plurality of limiting spaces 201 enclosed by the limiting structures 20 are located on a same side of the bottom support 10 in the first direction Z, and projections of all the limiting spaces 201 enclosed by the limiting structures 20 projected on the bottom support 10 along the first direction Z partially overlap.

With the above technical solution, at least some of the limiting spaces 201 enclosed by the limiting structures 20 are located on a same side of the bottom support 10 in the first direction Z, and their projections in the first direction Z partially overlap. In this way, the limiting structures 20 can be used to selectively limit batteries of corresponding models via the corresponding limiting space 201. In addition, the limiting structures 20 have smaller sizes in a direction perpendicular to the first direction Z, which helps reduce the size of the pallet 100.

It can be understood that one limiting structure 20 can be used to limit one battery and can be used to limit batteries of various different models.

In some embodiments, reference is made to FIGs. 4, 7, and 8 in conjunction with other accompanying drawings. The plurality of limiting spaces 201 are sequentially arranged in communication along the first direction Z.

As shown in FIGs. 4, 7, and 8, the plurality of limiting spaces 201 enclosed by the limiting structures 20 are sequentially arranged along the first direction Z and are sequentially connected along the first direction Z. It can be understood that the plurality of limiting spaces 201 are located on a same side of the bottom support 10 in the first direction Z, and projections of the plurality of limiting spaces 201 along the first direction Z overlap.

Under a condition that the limiting structure 20 limits the battery, the battery may be completely accommodated in a corresponding limiting space 201; alternatively, a portion of the battery in the first direction Z may be accommodated in a corresponding limiting space 201, and the other portion of the battery in the first direction Z may be accommodated in another one or more limiting spaces 201 adjacent to the corresponding limiting space 201 in the first direction Z.

With this arrangement, distribution of the plurality of limiting spaces 201 on the limiting structure 20 is obvious, making it convenient to place batteries in the corresponding limiting spaces 201, thereby improving efficiency of limiting batteries on the pallet 100. In addition, the structure of the limiting structure 20 is simple.

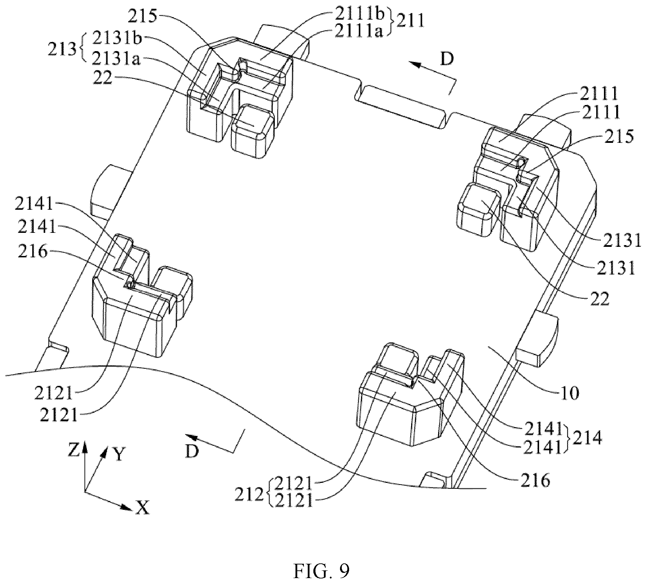

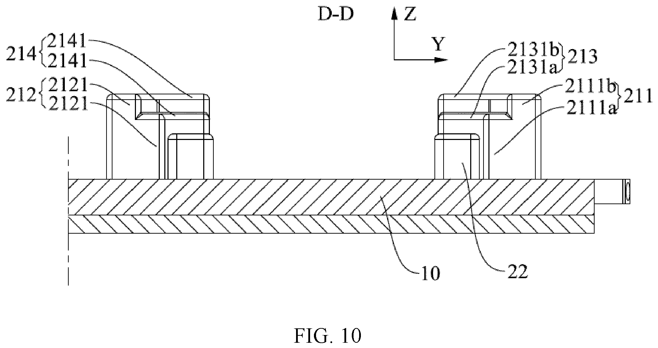

In some embodiments, reference is made to FIGs. 9 and 10 in conjunction with other accompanying drawings. FIG. 9 is a partial schematic diagram of the pallet 100 according to yet some other embodiments of this application, and FIG. 10 is a cross-sectional view along D-D in FIG. 9. In a cross-section parallel to the first direction Z, at least two limiting spaces 201 partially overlap.

Specifically, at least two of the plurality of limiting spaces 201 enclosed by the limiting structure 20 are located at a same position of the pallet 100 in the first direction Z. In addition, under a condition that a battery is limited in any one of the above two limiting spaces 201, a portion of the battery is further accommodated in the other limiting space 201.

This arrangement can reduce the size of the pallet 100 in the first direction Z, facilitating the design of the compact pallet 100.

In some embodiments, reference is made to FIGs. 2 to 7 in conjunction with other accompanying drawings. Two of the limiting spaces 201 are a first limiting space 201a and a second limiting space 201b respectively. In the second direction Y, size of the first limiting space 201a is smaller than size of the second limiting space 201b.

It can be understood that one of the two limiting spaces 201 enclosed by the limiting structure 20 is the first limiting space 201a and the other limiting space 201 is the second limiting space 201b. In FIGs. 4, 5, and 7, dashed lines are used to delineate the first limiting space 201a and the second limiting space 201b.

With the size of the first limiting space 201a in the second direction Y being smaller than the size of the second limiting space 201b in the second direction Y, size of a battery limited by the first limiting space 201a differs from size of a battery limited by the second limiting space 201b in the second direction Y. Therefore, the limiting structure 20 can be used to limit batteries with different sizes in the second direction Y.

In some embodiments, reference is made to FIGs. 6 to 8 in conjunction with other accompanying drawings. In the third direction X, size of the first limiting space 201a is smaller than size of the second limiting space 201b.

As shown in FIG. 7, it can be understood that size of the first limiting space 201a in the second direction Y is smaller than size of the second limiting space 201b in the second direction Y. As shown in FIG. 8, size of the first limiting space 201a in the third direction X is also smaller than size of the second limiting space 201b.

With this arrangement, the limiting structure 20 can be used to limit batteries that have different sizes in both the second direction Y and the third direction X.

It can be understood that the limiting structure 20 can be used to limit at least two batteries of different models, and the two types of batteries can have different sizes in one direction or in two non-parallel directions.

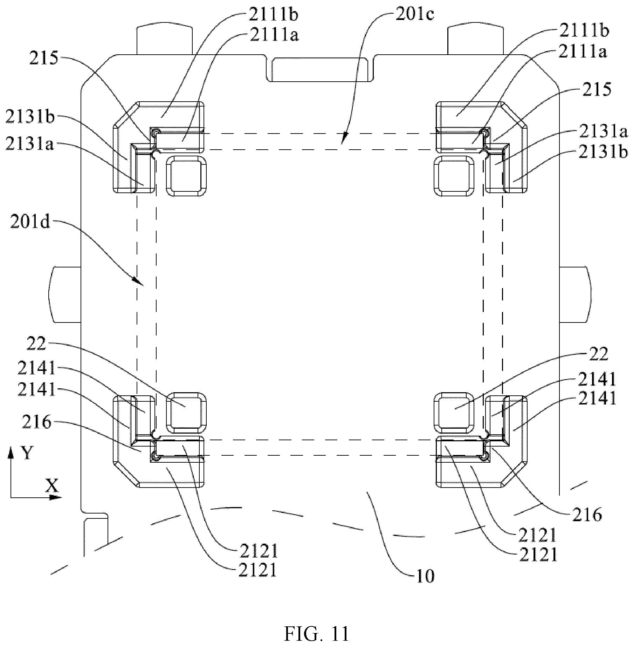

In some embodiments, reference is made to FIGs. 2 to 11 in conjunction with other accompanying drawings. FIG. 11 is a top view of FIG. 9. The limiting structure 20 includes at least one set of limiting assemblies 21, and the limiting assemblies 21 include a first limiting member 211, a second limiting member 212, a third limiting member 213, and a fourth limiting member 214. The first limiting member 211 and the second limiting member 212 are spaced apart along the second direction Y on the bottom support 10. The third limiting member 213 and the fourth limiting member 214 are spaced apart along the third direction X on the bottom support 10. In addition, the first limiting member 211, the second limiting member 212, the third limiting member 213, and the fourth limiting member 214 enclose a plurality of limiting spaces 201.

The first limiting member 211, the second limiting member 212, the third limiting member 213, and the fourth limiting member 214 all refer to components of the limiting structure 20 used for limiting batteries.

It can be understood that the first limiting member 211, the second limiting member 212, the third limiting member 213, and the fourth limiting member 214 enclosing a plurality of limiting spaces 201 may be that each limiting space 201 is enclosed by the first limiting member 211, the second limiting member 212, the third limiting member 213, and the fourth limiting member 214, as shown in FIGs. 2 to 8. It is also possible that some of the limiting spaces 201 are enclosed by the first limiting member 211, the second limiting member 212, the third limiting member 213, and the fourth limiting member 214; other limiting spaces 201 are enclosed by the first limiting member 211 and the second limiting member 212, or are enclosed by the first limiting member 211, the second limiting member 212, and, for example, but not limited to, a fifth limiting member 215 and a sixth limiting member 216 mentioned in the following; and yet other limiting spaces 201 are enclosed by a third limiting member 213 and a fourth limiting member 214, or are enclosed by a third limiting member 213, a fourth limiting member 214, and, for example, but not limited to, a fifth limiting member 215 and a sixth limiting member 216 mentioned in the following, as shown in FIGs. 9 to 11.

The first limiting member 211 and the second limiting member 212 are spaced apart along the second direction Y for being disposed on opposite sides of a corresponding limiting space 201 along the second direction Y, thereby achieving the limiting of a battery in the corresponding limiting space 201 along the second direction Y. The third limiting member 213 and the fourth limiting member 214 are spaced apart along the third direction X for being disposed on opposite sides of a corresponding limiting space 201 along the third direction X, thereby achieving the limiting of the battery in that corresponding limiting space 201 along the third direction X.

Under a condition that the first limiting member 211, the second limiting member 212, the third limiting member 213, and the fourth limiting member 214 are configured to enclose a same limiting space 201, limiting of a battery can be realized in both the second direction Y and the third direction X.

With the first limiting member 211, the second limiting member 212, the third limiting member 213, and the fourth limiting member 214 provided, the limiting assembly 21 encloses a plurality of limiting spaces 201, making the pallet 100 suitable for batteries of a plurality of different models, thereby improving the compatibility and versatility of the pallet 100.

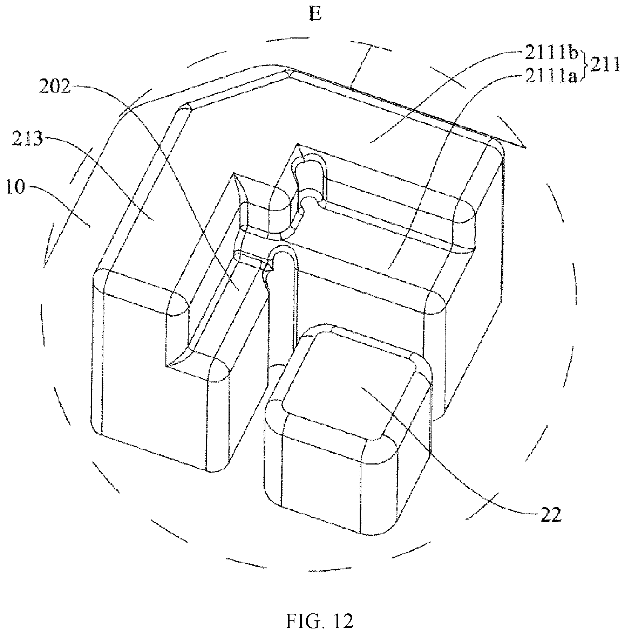

In some embodiments, reference is made to FIGs. 3 to 5, and FIG, 12 in conjunction with other accompanying drawings. FIG. 12 is an enlarged view at E in FIG. 3. The first limiting member 211 includes a plurality of first sub-blocks 2111, and the plurality of first sub-blocks 2111 are disposed sequentially along the second direction Y. The plurality of first sub-blocks 2111 are set to have gradually increasing sizes in the first direction Z along a direction of the first sub-blocks 2111 leaving the second limiting member 212 in the second direction Y. Each of the first sub-blocks 2111 is used to enclose a limiting space 201 together with the second limiting member 212, and the limiting spaces 201 respectively corresponding to the plurality of first sub-blocks 2111 are sequentially arranged in communication along the first direction Z.

It can be understood that of any two first sub-blocks 2111 adjacent to each other along the second direction Y, one of the first sub-blocks 2111 is closer to the second limiting member 212 along the second direction Y. In addition, the first sub-block 2111 that is closer to the second limiting member 212 in the second direction Y has a smaller size than the other second sub-block 2121 in the first direction Z.

For ease of description, it is set that in any two first sub-blocks 2111 adjacent to each other in the second direction Y, the first sub-block 2111 that is closer to the second limiting member 212 in the second direction Y is a 1st first sub-block 2111a, and the other first sub-block 2111 is a 2nd first sub-block 2111b. The 2nd first sub-block 2111b extends beyond the 1st first sub-block 2111a along the first direction Z.

It should be noted that the 1st first sub-block 2111a may define a limiting space 201 with the second limiting member 212, and a portion of the 2nd first sub-block 2111b beyond the 1st first sub-block 2111a along the first direction Z may also define another first limiting space 201a with the second limiting member 212. The limiting space 201 corresponding to the 1st first sub-block 2111a may be the first limiting space 201a, and the limiting space 201 corresponding to the 2nd first sub-block 2111b may be the second limiting space 201b. The first limiting space 201a and the second limiting space 201b are sequentially distributed along the first direction Z and are sequentially connected along the first direction Z. The 1st first sub-block 2111a and the 2nd first sub-block 2111b are sequentially distributed along the second direction Y, such that size of the second limiting space 201b in the second direction Y is larger than size of the first limiting space 201a in the second direction Y.

Under a condition that the battery is limited in the first limiting space 201a, at least a portion of the battery is between the second limiting member 212 and the 1st first sub-block 2111a such that the second limiting member 212 and the 1st first sub-block 2111a limit two opposite sides of the battery in the second direction Y, respectively. That is, the second limiting member 212 and the 1st first sub-block 2111a together realize the limiting of the battery in the second direction Y.

Under a condition that the battery is limited in the second limiting space 201b, at least a portion of the battery is between the second limiting member 212 and the portion of the 2nd first sub-block 2111b that exceeds the 1st first sub-block 2111a along the first direction Z such that the second limiting member 212 and the portion of the 2nd first sub-block 2111b that exceeds the 1st first sub-block 2111a along the first direction Z limit two opposite sides of the battery in the second direction Y, respectively. That is, the second limiting member 212 and the 2nd first sub-block 2111b together realize the limiting of the battery in the second direction Y. In addition, the battery may be supported along the first direction Z at an end of the 1st first sub-block 2111a away from the bottom support 10 in the first direction Z, thereby achieving the effect of supporting and limiting the battery on the pallet 100.

A battery limited to the first limiting space 201a may be completely accommodated in the first limiting space 201a, or a portion of it is accommodated in the first limiting space 201a and another portion may be accommodated in the second limiting space 201b.

It can be understood that each of the plurality of first sub-blocks 2111 of the first limiting member 211 can define a limiting space 201 with the second limiting member 212, resulting in a one-to-one correspondence between the plurality of first sub-blocks 2111 and the plurality of limiting spaces 201. The plurality of limiting spaces 201 in one-to-one correspondence to the plurality of first sub-blocks 2111 are sequentially distributed along the first direction Z and are sequentially connected. In addition, in a direction of the first limiting member 211 leaving the bottom support 10 in the first direction Z, the plurality of limiting spaces 201 in one-to-one correspondence to the plurality of the first sub-blocks 2111 have gradually increasing sizes in the second direction Y.

With this arrangement, each of the first sub-blocks 2111 can define a limiting space 201 together with the second limiting member 212, so that the plurality of limiting spaces 201 defined by the first limiting members 211 and the second limiting members 212 are set to be sequentially connected along the first direction Z and have gradually increasing sizes in the second direction Y. In this way, the plurality of limiting spaces 201 defined by the first limiting member 211 and the second limiting member 212 can be used for limiting batteries of different sizes in the second direction Y. In addition, it is also convenient for the operation of placing batteries into the limiting spaces 201.

In some embodiments, reference is made to FIG. 12 in conjunction with other accompanying drawings. A plurality of first sub-blocks 2111 of the first limiting member 211 are sequentially connected along the second direction Y to form a stepped structure.

This arrangement can reduce size of the first limiting member 211 in the second direction Y.

In some embodiments, the plurality of first sub-blocks 2111 are spaced apart along the second direction Y.

This arrangement allows the plurality of first sub-blocks 2111 of the first limiting member 211 to be arranged separately, thereby increasing the flexibility in the arrangement of the first limiting member 211.

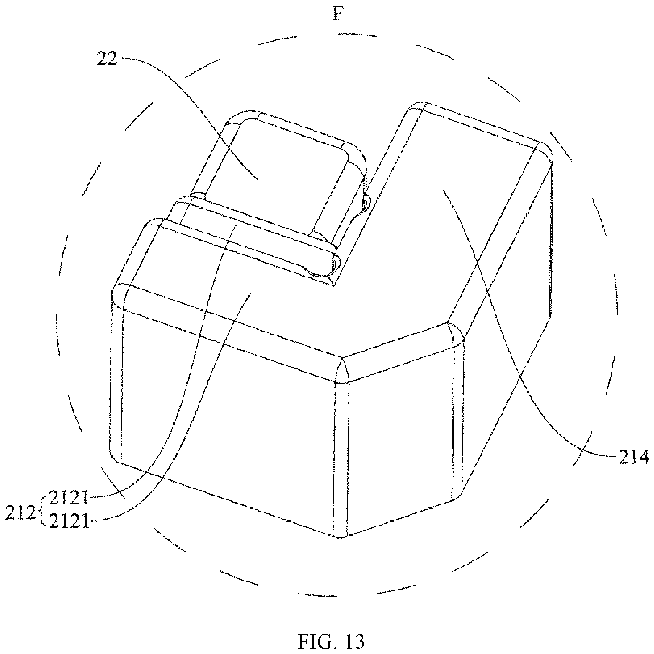

In some embodiments, reference is made to FIGs. 3 to 5, and FIG, 13 in conjunction with other accompanying drawings. FIG. 13 is an enlarged view at F in FIG. 3. The second limiting member 212 includes a plurality of second sub-blocks 2121, and the plurality of second sub-blocks 2121 are disposed sequentially along the second direction Y. The plurality of second sub-blocks 2121 are set to have gradually increasing sizes in the first direction Z along a direction of the second sub-blocks 2121 leaving the first sub-blocks 2111 along the second direction Y. Each of the second sub-blocks 2121 is used to enclose a limiting space 201 together with a corresponding first sub-block 2111.

As shown in FIGs. 3 to 5, FIG. 12, and FIG. 13, the number of the first sub-blocks 2111 is the same as the number of the second sub-blocks 2121, and the plurality of first sub-blocks 2111 and the plurality of second sub-blocks 2121 are provided in one-to-one correspondence. Size of each first sub-block 2111 in the first direction Z is the same as size of a corresponding second sub-block 2121 in the first direction Z. Each first sub-block 2111 and a corresponding second sub-block 2121 define the same limiting space 201.

Under a condition that at least a portion of a battery is limited in a limiting space 201 defined by a first sub-block 2111 and a corresponding second sub-block 2121, at least a portion of the battery is located between the first sub-block 2111 and the corresponding second sub-block 2121, and the first sub-block 2111 and the corresponding second sub-block 2121 together realize the limiting of the battery in the second direction Y.

With this arrangement, the plurality of first sub-blocks 2111 and the plurality of second sub-blocks 2121 are provided in correspondence, facilitating the formation of the plurality of limiting spaces 201 sequentially connected along the first direction Z. In addition, the plurality of limiting spaces 201 have different sizes in the second direction Y, so as to be suitable for batteries with different sizes in the second direction Y. In addition, it is also convenient for the operation of placing batteries into the limiting spaces 201.

In addition, under a condition that a battery is limited in the second limiting space 201b, the battery may be supported by a 1st first sub-block 2111a along the first direction Z and supported by a second sub-block 2121 corresponding to the 1st first sub-block 2111a along the first direction Z, achieving the effect of stable placement of the battery on the pallet 100.

In some embodiments, the second limiting member 212 may not include a plurality of second sub-blocks 2121. Based on this, the bottom support 10 may be provided with movable members capable of supporting batteries along the first direction Z. Under a condition that a battery needs to be limited in a corresponding limiting space 201, for example, the battery needs to be limited in the second limiting space 201b, the battery may be supported by the 1st first sub-block 2111a along the first direction Z; and the movable member can be moved to a predetermined position along the first direction Z to support the battery along the first direction Z. This also achieves the effect of stable placement of the battery on the pallet 100.

In some embodiments, reference is made to FIG. 13 in conjunction with other accompanying drawings. A plurality of second sub-blocks 2121 of the second limiting member 212 are sequentially connected along the second direction Y to form a stepped structure.

This arrangement can reduce the size of the second limiting member 212 in the second direction Y.

In some embodiments, the plurality of second sub-blocks 2121 are spaced apart along the second direction Y.

This arrangement allows the plurality of second sub-blocks 2121 of the second limiting member 212 to be arranged separately, thereby increasing the flexibility in the arrangement of the second limiting member 212.

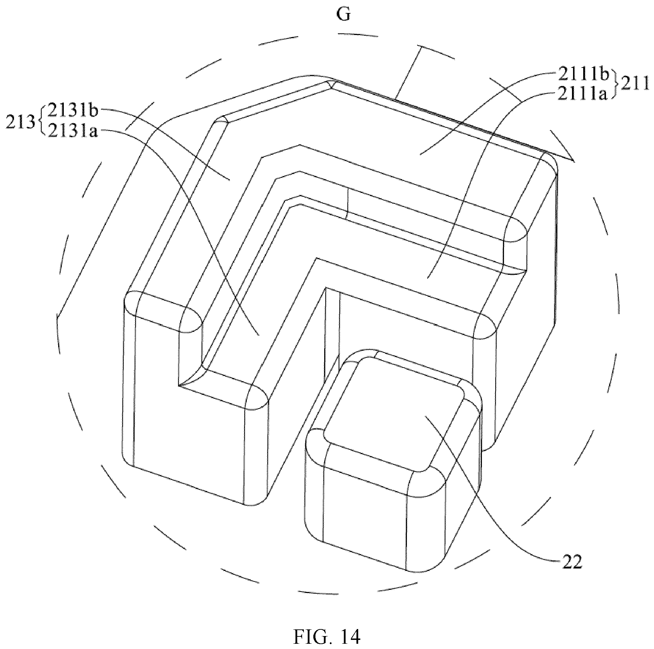

In some embodiments, reference is made to FIGs. 6 to 8 and FIG. 14 in conjunction with other accompanying drawings. FIG. 14 is an enlarged view at G in FIG. 6. A third limiting member 213 includes a plurality of third sub-blocks 2131. The plurality of third sub-blocks 2131 are sequentially distributed along the third direction X. The plurality of third sub-blocks 2131 are set to have gradually increasing sizes in the first direction Z along a direction of the third sub-blocks 2131 leaving a fourth limiting member 214 in the third direction X. Each of the third sub-blocks 2131 is used to enclose a limiting space 201 together with the fourth limiting member 214, and the limiting spaces 201 respectively corresponding to the plurality of third sub-blocks 2131 are sequentially arranged in communication along the first direction Z.

It can be understood that of any two third sub-blocks 2131 adjacent to each other in the third direction X, one of the third sub-blocks 2131 is closer to the fourth limiting member 214 in the third direction X. In addition, the third sub-block 2131 that is closer to the fourth limiting member 214 in the third direction X has a smaller size than the other third sub-block 2131 in the first direction Z.

For ease of description, it is set that in any two third sub-blocks 2131 adjacent to each other in the third direction X, the third sub-block 2131 that is closer to the fourth limiting member 214 in the third direction X is a 1st third sub-block 2131a, and the other third sub-block 2131 is a 2nd third sub-block 2131b. The 2nd third sub-block 2131b extends beyond the 1st third sub-block 2131a along the first direction Z.

It should be noted that the 1st third sub-block 2131a may define a limiting space 201 with the fourth limiting member 214, and a portion of the 2nd third sub-block 2131b beyond the 1st third sub-block 2131a along the first direction Z may define another first limiting space 201a with the fourth limiting member 214. The limiting space 201 corresponding to the 1st third sub-block 2131a may be the first limiting space 201a and the limiting space 201 corresponding to the 2nd third sub-block 2131b may be the second limiting space 201b. The first limiting space 201a and the second limiting space 201b are sequentially distributed along the first direction Z and are sequentially connected along the first direction Z. The 1st third sub-block 2131a and the 2nd third sub-block 2131b are sequentially distributed along the third direction X, such that size of the second limiting space 201b in the third direction X is larger than size of the first limiting space 201a in the third direction X.

Under a condition that the battery is limited in the first limiting space 201a, at least a portion of the battery is between the fourth limiting member 214 and the 1st third sub-block 2131a such that the fourth limiting member 214 and the 1st third sub-block 2131a limit two opposite sides of the battery along the third direction X, respectively. That is, the fourth limiting member 214 and the 1st third sub-block 2131a together realize the limiting of the battery along the third direction X.

Under a condition that the battery is limited in the second limiting space 201b, at least a portion of the battery is between the fourth limiting member 214 and the portion of the 2nd third sub-block 2131b that exceeds the 1st third sub-block 2131a along the first direction Z such that the fourth limiting member 214 and the portion of the 2nd third sub-block 2131b that exceeds the 1st third sub-block 2131a along the first direction Z limit two opposite sides of the battery in the third direction X, respectively. That is, the fourth limiting member 214 and the 2nd third sub-block 2131b together realize the limiting of the battery along the third direction X. In addition, the battery may be supported along the first direction Z at an end of the 1st third sub-block 2131a away from the bottom support 10 in the first direction Z, thereby achieving the effect of supporting and limiting the battery on the pallet 100.

A battery limited in the first limiting space 201a may be completely accommodated in the first limiting space 201a, or a portion of it is accommodated in the first limiting space 201a and another portion may be accommodated in the second limiting space 201b.

It can be understood that each of the plurality of third sub-blocks 2131 of the third limiting member 213 can define a limiting space 201 with the fourth limiting member 214, resulting in a one-to-one correspondence between the plurality of third sub-blocks 2131 and the plurality of limiting spaces 201. The plurality of limiting spaces 201 in one-to-one correspondence to the plurality of third sub-blocks 2131 are sequentially distributed along the first direction Z and are sequentially connected. In addition, in a direction of the third limiting member 231 leaving the bottom support 10 in the first direction Z, the plurality of limiting spaces 201 in one-to-one correspondence to the plurality of the third sub-blocks 2131 have gradually increasing sizes in the third direction X.

With this arrangement, each of the third sub-blocks 2131 can define a limiting space 201 together with the fourth limiting member 214, so that the plurality of limiting spaces 201 defined by the third limiting members 213 and the fourth limiting members 214 are set to be sequentially connected along the first direction Z and have gradually increasing sizes in the third direction X. In this way, the plurality of limiting spaces 201 defined by the third limiting member 213 and the fourth limiting member 214 can be used for limiting batteries of different sizes in the third direction X. In addition, it is also convenient for the operation of placing batteries into the limiting spaces 201.

In some embodiments, reference is made to FIG. 14 in conjunction with other accompanying drawings. A plurality of third sub-blocks 2131 of the third limiting member 213 are sequentially connected along the third direction X to form a stepped structure.

This arrangement can reduce the size of the third limiting member 213 in the third direction X.

In some embodiments, a plurality of third sub-blocks 2131 of the third limiting member 213 are spaced apart along the third direction X.

This arrangement allows the plurality of third sub-blocks 2131 of the third limiting member 213 to be arranged separately, thereby increasing the flexibility in the arrangement of the third limiting member 213.

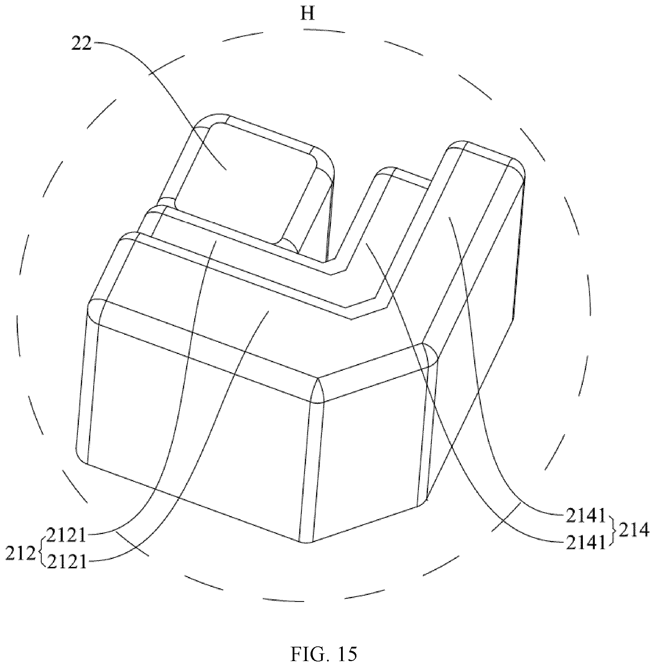

In some embodiments, reference is made to FIGs. 6 to 8 and FIG. 14 and 15 in conjunction with other accompanying drawings. FIG. 15 is an enlarged view at H in FIG. 6. The fourth limiting member 214 includes a plurality of fourth sub-blocks 2141, and the plurality of fourth sub-blocks 2141 are disposed sequentially along the third direction X. The plurality of fourth sub-blocks 2141 are set to have gradually increasing sizes in the first direction Z along a direction of the fourth sub-blocks 2141 leaving the third sub-blocks 2131 in the third direction X. Each of the fourth sub-blocks 2141 is used to enclose a limiting space 201 together with a corresponding third sub-block 2131.

As shown in FIGs. 6 to 8, FIG. 14, and FIG. 15, the number of the third sub-blocks 2131 is the same as the number of the fourth sub-blocks 2141, and the plurality of third sub-blocks 2131 and the plurality of fourth sub-blocks 2141 are provided in one-to-one correspondence. The size of each third sub-block 2131 in the first direction Z is the same as the size of a corresponding fourth sub-block 2141 in the first direction Z. Each third sub-block 2131 and a corresponding fourth sub-block 2141 define the same limiting space 201.

Under a condition that at least a portion of a battery is limited in a limiting space 201 defined by a third sub-block 2131 and a corresponding fourth sub-block 2141, at least a portion of the battery is located between the third sub-block 2131 and the corresponding fourth sub-block 2141, and the third sub-block 2131 and the corresponding fourth sub-block 2141 together realize the limiting of the battery in the third direction X.

With this arrangement, the plurality of third sub-blocks 2131 and the plurality of fourth sub-blocks 2141 are provided in correspondence, facilitating the formation of the plurality of limiting spaces 201 sequentially connected along the first direction Z. In addition, the plurality of limiting spaces 201 have different sizes in the third direction X, so as to be suitable for batteries with different sizes in the third direction X. In addition, it is also convenient for the operation of placing batteries into the limiting spaces 201.

In addition, under a condition that a battery is limited in the second limiting space 201b, the battery may be supported by a 1st third sub-block 2131a along the first direction Z and supported by a fourth sub-block 2141 corresponding to the 1st third sub-block 2131a along the first direction Z, achieving the effect of stable placement of the battery on the pallet 100.

In some embodiments, the fourth limiting member 214 may not include a plurality of fourth sub-blocks 2141. Based on this, the bottom support 10 may be provided with movable members capable of supporting batteries along the first direction Z. Under a condition that a battery needs to be limited in a corresponding limiting space 201, for example, the battery needs to be limited in the second limiting space 201b, the battery may be supported by the 1st third sub-block 2131a along the first direction Z; and the movable member can be moved to a predetermined position along the first direction Z to support the battery along the first direction Z. This also achieves the effect of stable placement of the battery on the pallet 100.

In some embodiments, reference is made to FIG. 15 in conjunction with other accompanying drawings. A plurality of fourth sub-blocks 2141 of the fourth limiting member 214 are sequentially connected along the third direction X to form a stepped structure.

This arrangement can reduce the size of the fourth limiting member 214 in the third direction X.

In some embodiments, a plurality of fourth sub-blocks 2141 of the fourth limiting member 214 are spaced apart along the third direction X.

This arrangement allows the plurality of fourth sub-blocks 2141 of the fourth limiting member 214 to be arranged separately, thereby increasing the flexibility in the arrangement of the fourth limiting member 214.

Based on the above structure, the limiting structure 20 may include a plurality of limiting members to enclose a plurality of limiting spaces 201 with different projections in the first direction Z. This makes the structure of the pallet 100 simple and cost-effective.

Based on the above structure, each first sub-block 2111 can correspond to one limiting space 201, and each third sub-block 2131 can also correspond to one limiting space 201. There may be a relationship between the limiting space 201 corresponding to the first sub-block 2111 and the limiting space 201 corresponding to the third sub-block 2131, as described in the embodiments below.

In some embodiments, reference is made to FIGs. 6 to 8 in conjunction with other accompanying drawings. At least one of the limiting spaces 201 is enclosed collectively by the first sub-block 2111, the second limiting member 212, the third sub-block 2131, and the fourth limiting member 214.

It can be understood that at least one of the plurality of limiting spaces 201 in one-to-one correspondence to the plurality of first sub-blocks 2111 and at least one of the plurality of limiting spaces 201 in one-to-one correspondence to the plurality of third sub-blocks 2131 are the same limiting space 201. That is, at least one of the limiting spaces 201 is enclosed by both the first sub-block 2111 and the second limiting member 212, as well as by both the third sub-block 2131 and the fourth limiting member 214. Based on this, under a condition that a battery is limited in a limiting space 201 collectively enclosed by the first sub-block 2111, the second limiting member 212, the third sub-block 2131, and the fourth limiting member 214, and at least a portion of the battery is located between a first sub-block 2111 and a second limiting member 212, as well as between a corresponding third sub-block 2131 and fourth limiting member 214. The first sub-block 2111 and the second limiting member 212 together realize the limiting of the battery in the second direction Y, and the third sub-block 2131 and the fourth limiting member 214 together realize the limiting of the battery in the third direction X.

Under a condition that the second limiting member 212 includes a plurality of second sub-blocks 2121, a first sub-block 2111 and a corresponding second sub-block 2121 together realize the limiting of the battery in the second direction Y. Under a condition that the fourth limiting member 214 includes a plurality of fourth sub-blocks 2141, a third sub-block 2131 and a corresponding fourth sub-block 2141 together realize the limiting of the battery in the third direction X.

With the above-described technical solution, the at least one limiting space 201 can limit a battery along both the second direction Y and the third direction X.

In FIG. 6 to FIG. 8, the limiting spaces 201 are enclosed collectively by the first sub-blocks 2111, the third sub-blocks 2131, the second limiting members 212, and the fourth limiting members 214. In FIG. 2 to FIG. 5, the first limiting member 211 is divided into a plurality of first sub-blocks 2111, the third limiting member 213 is not divided into a plurality of third sub-blocks 2131, and each limiting space 201 is enclosed collectively by the first sub-block 2111, the second limiting member 212, the third limiting member 213, and the fourth limiting member 214.

In some embodiments, reference is made to FIGs. 6 to 8 in conjunction with other accompanying drawings. The first sub-blocks 2111 and the third sub-blocks 2131, the second limiting members 212, and the fourth limiting members 214 enclose the limiting spaces 201.

It can be understood that all the first sub-blocks 2111 of the first limiting member 211 are in one-to-one correspondence to all the third sub-blocks 2131 of the third limiting member 213, and the first sub-blocks 2111 and the corresponding third sub-blocks 2131, the second limiting members 212, and the fourth limiting members 214 enclose the limiting spaces 201. That is, all the limiting spaces 201 enclosed by the limiting structure 20 are enclosed by the corresponding first sub-blocks 2111, third sub-blocks 2131, second limiting members 212, and fourth limiting members 214.

Based on this, the plurality of limiting spaces 201 enclosed by the limiting structure 20 are sequentially arranged in communication along the first direction Z. Any two of the limiting spaces 201 distributed sequentially along the first direction Z are a first limiting space 201a and a second limiting space 201b, respectively. Size of the first limiting space 201a in the second direction Y is smaller than size of the second limiting space 201b in the second direction Y, and size of the first limiting space 201a in the third direction X is smaller than size of the second limiting space 201b in the third direction X.

The first sub-block 2111 corresponding to the first limiting space 201a is a 1st first sub-block 2111a, the first sub-block 2111 corresponding to the second limiting space 201b is a 2nd first sub-block 2111b, the third sub-block 2131 corresponding to the first limiting space 201a is a 1st third sub-block 2131a, and the third sub-block 2131 corresponding to the second limiting space 201b is a 2nd third sub-block 2131b. Under a condition that the battery is limited in the second limiting space 201b, the 2nd first sub-block 2111b and the second limiting member 212 together realize the limiting of the battery in the second direction Y, and the 2nd third sub-block 2131b and the fourth limiting member 214 together realize the limiting of the battery in the third direction X. In addition, the battery may be supported by the 1st first sub-block 2111a along the first direction Z or may be supported by the 1st third sub-block 2131a along the first direction Z.

With the above technical solution, the plurality of limiting spaces 201 enclosed by the limiting structure 20 can be used to accommodate batteries of different models, and sizes of batteries of two models can be different in both the second direction Y and the third direction X. That is, the limiting structure 20 can be used to accommodate batteries of different models with different sizes in both the second direction Y and the third direction X, greatly improving the compatibility and versatility of the pallet 100.

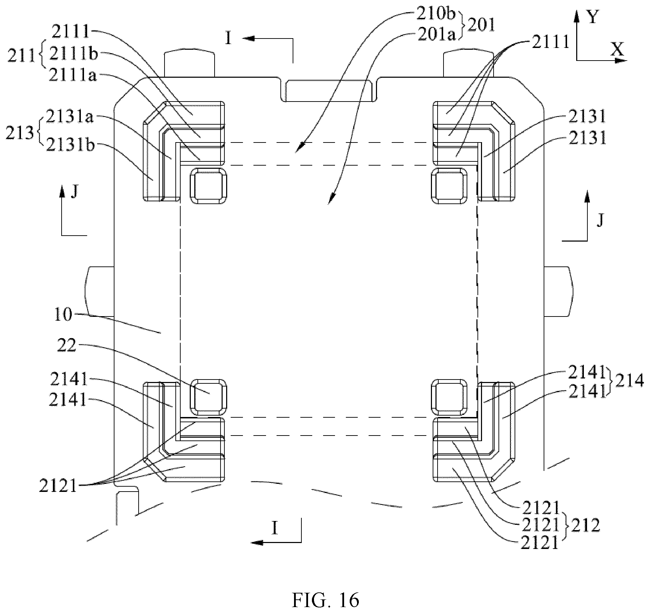

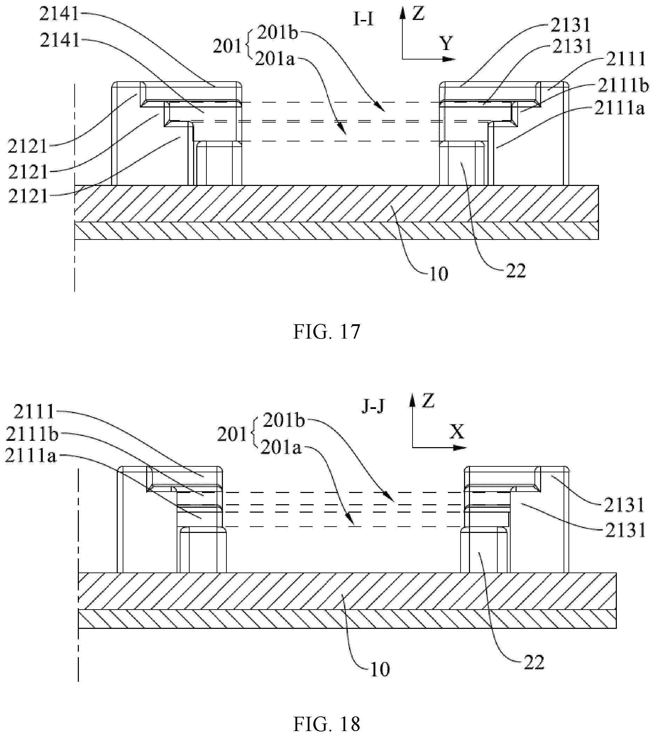

In some embodiments, reference is made to FIGs. 16 to 18 in conjunction with other accompanying drawings. FIG. 16 is a partial top view of the pallet 100 according to yet some other embodiments of this application, FIG. 17 is a cross-sectional view along I-I in FIG. 16, and FIG. 18 is a cross-sectional view along J-J in FIG. 16. The plurality of first sub-blocks 2111 each enclose a limiting space 201 together with a same third sub-block 2131.

It can be understood that each first sub-block 2111 corresponds to a limiting space 201, and each third sub-block 2131 also corresponds to a limiting space 201. The plurality of limiting spaces 201 in one-to-one correspondence to the plurality of first sub-blocks 2111 are sequentially arranged in communication along the first direction Z. Among these limiting spaces 201 sequentially connected along the first direction Z, any first limiting space 201a is the same as one of the limiting spaces 201 corresponding to a third sub-block 2131. This allows the plurality of limiting spaces 201 to have different sizes in the second direction Y and have the same size in the third direction X.

For example, as shown in FIGs. 16 to 18, two adjacent first sub-blocks 2111 are a 1st first sub-block 2111a and a 2nd first sub-block 2111b, and the 1st first sub-block 2111a corresponds to the first limiting space 201a, while the 2nd first sub-block 2111b corresponds to the second limiting space 201b. The first limiting space 201a is the same limiting space 201 as a limiting space 201 corresponding to one of the third sub-blocks 2131, and the second limiting space 201b is also the same limiting space 201 as the limiting space 201 corresponding to that third sub-block 2131. Based on this, size of the first limiting space 201a in the second direction Y is smaller than size of the second limiting space 201b in the second direction Y, and size of the first limiting space 201a in the third direction X is the same as size of the second limiting space 201b in the third direction X. Under a condition that the battery is limited in the first limiting space 201a, the 1st first sub-block 2111a and this third sub-block 2131 realize the limiting of the battery in the second direction Y and the third direction X, respectively. Under a condition that the battery is limited in the second limiting space 201b, the 2nd first sub-block 2111b and this third sub-block 2131 realize the limiting of the battery in the second direction Y and the third direction X, respectively.

It should be added that based on the division of the third limiting member 213 into a plurality of third sub-blocks 2131, the plurality of limiting spaces 201 in one-to-one correspondence to the plurality of third sub-blocks 2131 have different sizes in the third direction X.

With this arrangement, the plurality of limiting spaces 201 formed by the limiting structure 20 can be used for accommodating batteries of different models with different sizes in the second direction Y, and can also be used for accommodating batteries of different models with different sizes in the third direction X, greatly improving the compatibility and versatility of the pallet 100.

It should be noted that under a condition that the third limiting member 213 is not divided into a plurality of third sub-blocks 2131, the third limiting member 213 can enclose the limiting spaces 201 together with the first sub-block 2111, the second limiting member 212, and the fourth limiting member 214.

Based on this, the plurality of limiting spaces 201 in one-to-one correspondence to the plurality of first sub-blocks 2111 are all of the limiting spaces 201 enclosed by the limiting structure 20, and all of the limiting spaces 201 are sequentially arranged in communication along the first direction Z. In addition, the plurality of limiting spaces 201 each have different sizes in the second direction Y, and the plurality of limiting spaces 201 have the same size in the third direction X, so that the limiting structure 20 can be used for limiting batteries of different models with different sizes in the second direction Y.

In some embodiments, reference is made to FIGs. 9 to 11 in conjunction with other accompanying drawings. At least one of the limiting spaces 201 corresponding to the first sub-blocks 2111 and any one of the limiting spaces 201 corresponding to the third sub-blocks 2131 are different limiting spaces 201.

It can be understood that at least one limiting space 201 corresponding to a first sub-block 2111 and any limiting space 201 corresponding to a third sub-block 2131 are different limiting spaces 201. These limiting spaces 201 corresponding to the first sub-blocks 2111 and the third sub-blocks 2131 can be sequentially arranged in communication along the first direction Z or located at a same position along the first direction Z on the pallet 100.

The plurality of limiting spaces 201 in one-to-one correspondence to the plurality of first sub-blocks 2111 have different sizes in the second direction Y; and the plurality of limiting spaces 201 in one-to-one correspondence to the plurality of third sub-blocks 2131 have different sizes in the third direction X.

For example, as shown in FIGs. 9 to 11, a limiting space 201 corresponding to one of the first sub-blocks 2111 is a third limiting space 201c, a limiting space 201 corresponding to one of the second sub-blocks 2121 is a fourth limiting space 201d, and the third limiting space 201c and the fourth limiting space 201d are different limiting spaces 201.

Under a condition that the battery is limited in the third limiting space 201c, the first sub-block 2111 and the second limiting member 212 work together to realize the limiting of the battery in the second direction Y. When it is necessary to realize the limiting of the battery in the third direction X, a fifth limiting member 215 and a sixth limiting member 216 mentioned below can be provided, and the limiting of the battery in the third direction X can be realized by the fifth limiting member 215 and the sixth limiting member 216. Under a condition that the battery is limited in the fourth limiting space 201d, the third sub-block 2131 and the fourth limiting member 214 together realize the limiting of the battery in the third direction X. When it is necessary to realize the limiting of the battery in the second direction Y, a fifth limiting member 215 and a sixth limiting member 216 as covered below may be provided to realize the limiting of the battery in the second direction Y by the fifth limiting member 215 and the sixth limiting member 216.

In some possible designs, a limiting space 201 corresponding to any one of the first sub-blocks 2111 and a limiting space 201 corresponding to any one of the third sub-blocks 2131 are different limiting spaces 201. That is, the first sub-block 2111 does not enclose the limiting space 201 together with the third sub-block 2131. Based on this, the battery may be selectively limited in the limiting space 201 corresponding to the first sub-block 2111 or may be selectively limited in the limiting space 201 corresponding to the third sub-block 2131.

The first sub-block 2111 may enclose the limiting space 201 only with the second limiting member 212, achieving the limiting of the battery in the second direction Y jointly by the first sub-block 2111 and the second limiting member 212. The first sub-block 2111 can also enclose the limiting space 201 together with the second limiting member 212 and optionally, the fifth limiting member 215 and the sixth limiting member 216 mentioned below, achieving the limiting of the battery in both the second direction Y and the third direction X by the first sub-block 2111, the second limiting member 212, the fifth limiting member 215, and the sixth limiting member 216. Accordingly, the third sub-block 2131 may enclose the limiting space 201 only with the fourth limiting member 214, achieving the limiting of the battery in the third direction X jointly by the third sub-block 2131 and the fourth limiting member 214. The third sub-block 2131 can also enclose the limiting space 201 together with the fourth limiting member 214 and optionally, the fifth limiting member 215 and the sixth limiting member 216 mentioned below, achieving the limiting of the battery in both the second direction Y and the third direction X by the third sub-block 2131, the fourth limiting member 214, the fifth limiting member 215, and the sixth limiting member 216.

In some other possible designs, the limiting spaces 201 corresponding to some of the first sub-blocks 2111 are different from the limiting spaces 201 corresponding to the third sub-blocks 2131, while the other first sub-blocks 2111 can enclose limiting spaces 201 together with corresponding third sub-blocks 2131, that is, the first sub-block 2111 can enclose a limiting space 201 together with a corresponding third sub-block 2131, the second limiting member 212, and the fourth limiting member 214.

With this arrangement, at least one first sub-block 2111 and the third sub-block 2131 respectively define different limiting spaces 201, that is, the limiting space 201 corresponding to the at least one first sub-block 2111 and the limiting space 201 defined by the third sub-block 2131 are different limiting spaces 201, making the limiting structure 20 capable of defining a plurality of different limiting spaces 201, and thereby accommodating more different models of batteries.

In some embodiments, reference is made to FIGs. 9 to 11 in conjunction with other accompanying drawings. The limiting assembly 21 further includes a fifth limiting member 215 and a sixth limiting member 216. The fifth limiting member 215 is disposed between the first sub-block 2111 and the third sub-block 2131, and the sixth limiting member 216 is disposed between the second limiting member 212 and the fourth limiting member 214. The fifth limiting member 215 and the sixth limiting member 216 are configured to enclose the limiting space 201 with the first sub-block 2111 and the second limiting member 212, and are also configured to enclose the limiting space 201 with the third sub-block 2131 and the fourth limiting member 214.

It can be understood to set that a limiting space 201 corresponding to one of the first sub-blocks 2111 is a third limiting space 201c, a limiting space 201 corresponding to one of the third sub-blocks 2131 is a fourth limiting space 201d, and the third limiting space 201c and the fourth limiting space 201d are different limiting spaces 201.

The third limiting space 201c is enclosed as the limiting space 201 by the first sub-block 2111, the second limiting member 212, the fifth limiting member 215, and the sixth limiting member 216 together. Under a condition that the battery is limited in the third limiting space 201c, the first sub-block 2111 and the second limiting member 212 together realize the limiting of the battery in the second direction Y, and the fifth limiting member 215 and the sixth limiting member 216 together realize the limiting of the battery in the third direction X.

The fourth limiting space 201d is enclosed by the third sub-block 2131, the fourth limiting member 214, the fifth limiting member 215, and the sixth limiting member 216 together. Under a condition that the battery is limited in the fourth limiting space 201d, the third sub-block 2131 and the fourth limiting member 214 together realize the limiting of the battery along the third direction X, and the fifth limiting member 215 and the sixth limiting member 216 together realize the limiting of the battery in the second direction Y.

The fifth limiting member 215 is disposed between the first sub-block 2111 and the third sub-block 2131, and the sixth limiting member 216 is disposed between the second limiting member 212 and the fourth limiting member 214. This arrangement ensures that the sizes of the limiting spaces 201 are not excessively reduced by the presence of the fifth limiting member 215 and the sixth limiting member 216, facilitating the limiting of the battery in the limiting spaces 201.

With the above technical solution, both a limiting space 201 corresponding to one of the first sub-blocks 2111 and a limiting space 201 corresponding to any one of the third sub-blocks 2131 can achieve limiting of the battery along both the second direction Y and the third direction X, maintaining stable limiting of the battery.

In some embodiments, reference is made to FIGs. 2 and 3 in conjunction with other accompanying drawings. The limiting structure 20 further includes a supporting member 22 disposed at the bottom support 10, and the supporting member 22 is configured to support the battery along the first direction Z.

As shown in FIG. 3, the supporting member 22 is further configured to assist in enclosing a limiting space 201 closest to the bottom support 10 in the first direction Z. In this way, under a condition that the battery is limited in the limiting space 201 closest to the bottom support 10 in the first direction Z, the supporting member 22 supports the battery along the first direction Z.

With this arrangement, the supporting member 22 can support the battery along the first direction Z, maintaining stable limiting of the battery on the pallet 100.

In some embodiments, the first limiting member 211, the second limiting member 212, the third limiting member 213, and the fourth limiting member 214 are sequentially connected along the first direction Z.

With this arrangement, the limiting structure 20 has a substantially annular structure.

In some embodiments, reference is made to FIGs. 3 to 18 in conjunction with other accompanying drawings. The first limiting member 211 is connected to the third limiting member 213.

Based on the arrangement of the first limiting member 211 and the second limiting member 212 being spaced apart along the second direction Y, both the third limiting member 213 and the first limiting member 211 can be spaced apart from the second limiting member 212 along the second direction Y. Based on the arrangement of the third limiting member 213 and the fourth limiting member 214 being spaced apart along the third direction X, both the first limiting member 211 and the third limiting member 213 can be spaced apart from the fourth limiting member 214 along the third direction X. This arrangement allows the limiting structure 20 to better avoid a transporting apparatus configured to transport the battery, facilitating the limiting of the battery on the pallet 100.

In some embodiments, reference is made to FIGs. 3 to 18 in conjunction with other accompanying drawings. The second limiting member 212 is connected to the fourth limiting member 214.

Based on the arrangement of the first limiting member 211 and the second limiting member 212 being spaced apart along the second direction Y, both the fourth limiting member 214 and the second limiting member 212 can be spaced apart from the first limiting member 211 along the second direction Y. Based on the arrangement of the third limiting member 213 and the fourth limiting member 214 being spaced apart along the third direction X, both the second limiting member 212 and the fourth limiting member 214 can be spaced apart from the third limiting member 213 along the third direction X. This arrangement allows the limiting structure 20 to better avoid a transporting apparatus configured to transport the battery, facilitating the limiting of the battery on the pallet 100.

The first limiting member 211 and the third limiting member 213 may be connected to form an L-shaped structure. The second limiting member 212 and the fourth limiting member 214 may also be connected to form an L- shaped structure.

Further, in other embodiments, the first limiting member 211 and the third limiting member 213 are spaced apart from each other, and the second limiting member 212 and the fourth limiting member 214 are spaced apart from each other.

In some embodiments, the first limiting member 211 is provided with an avoidance groove 202 on a side of the first limiting member 211 facing the second limiting member 212 along the second direction Y, and the second limiting member 212 is also provided with an avoidance groove 202 on a side of the second limiting member 212 facing the first limiting member 211 along the second direction Y.

Alternatively, as shown in FIGs. 3, 12, and 13, the third limiting member 213 is provided with an avoidance groove 202 on a side of the third limiting member 213 facing the fourth limiting member 214 along the third direction X, and the fourth limiting member 214 is also provided with an avoidance groove 202 on a side of the fourth limiting member 214 facing the third limiting member 213 along the third direction X.

The avoidance groove 202 communicates with the limiting space 201.

With this arrangement, under a condition that at least a portion of a battery is limited in the avoidance groove 202, a pole or another component of the battery can be avoided in the avoidance groove 202.

In some embodiments, the limiting structure 20 includes a plurality of sets of limiting assemblies 21, and the arrangement of the plurality of sets of limiting assemblies 21 can improve the stability of the limiting effect of the limiting structure 20 on the battery.

For example, as shown in FIGs. 2 and 3, the limiting assemblies 21 are provided in two sets, the first limiting members 211 of the two sets of limiting assemblies 21 are spaced apart along the third direction X, and the second limiting members 212 of the two sets of limiting assemblies 21 are spaced apart along the third direction X. The third limiting members 21 of the two sets of limiting assemblies 21 are spaced apart along the third direction X, and the fourth limiting members 214 of the two sets of limiting assemblies 21 are spaced apart along the third direction X.

In some embodiments, the limiting structure 20 is made of a flexible material.

Specifically, the first limiting member 211, the second limiting member 212, the third limiting member 213, the fourth limiting member 214, the fifth limiting member 215, the sixth limiting member 216, the supporting member 22, and the like are all made of flexible materials.

With this arrangement, when the limiting structure 20 limits the battery, it makes soft contact with the surface of the battery, thereby alleviating the problem of battery damage.

In some embodiments, the limiting structure 20 is made of elastic materials.

Specifically, the first limiting member 211, the second limiting member 212, the third limiting member 213, the fourth limiting member 214, the fifth limiting member 215, the sixth limiting member 216, the supporting member 22, and the like are all made of elastic materials.

With this arrangement, when the limiting structure 20 limits the battery, it makes elastic contact with the surface of the battery, thereby providing buffering protection for the battery and alleviating the problem of battery damage.

For example, the limiting structure 20 may be made of nylon, paraformaldehyde, polyurethane, rubber, silicone, and the like.

Based on the above conception, reference is made to FIG. 1 in conjunction with other accompanying drawings. An embodiment of this application further provides a battery processing device 1000, the battery processing device 1000 including a pallet 100. The pallet 100 in this embodiment is the same as the pallet 100 in the previous embodiment. For details, refer to the relevant description of the pallet 100 in the previous embodiment, which is not repeated.

The battery processing device 1000 provided in this embodiment of this application also has the advantage of being able to accommodate batteries of a plurality of different models by using the pallet 100 in the above embodiments.

Based on the above conception, an embodiment of this application further provides a battery production line including the battery processing device 1000.

The battery production line provided in this embodiment of this application also has the advantage of being able to accommodate batteries of a plurality of different models by using the foregoing battery processing device 1000.

In one embodiment of this application, as shown in FIGs. 2 to 5, the pallet 100 includes a bottom support 10 and a limiting structure 20. The limiting structure 20 is disposed on one of sides of the bottom support 10 along the first direction Z to enclose a plurality of limiting spaces 201 disposed on a same side of the bottom support 10 along the first direction Z. Projections of the plurality of limiting spaces 201 in the first direction Z are different and partially overlap.

The limiting structure 20 includes two sets of limiting assemblies 21. Each set of limiting assemblies 21 includes a first limiting member 211, a second limiting member 212, a third limiting member 213, and a fourth limiting member 214. The first limiting member 211 and the second limiting member 212 are spaced apart along the second direction Y, and the third limiting member 213 and the fourth limiting member 214 are spaced apart along the third direction X. The first limiting member 211 includes a plurality of first sub-blocks 2111 sequentially distributed along the second direction Y, and the second limiting member 212 includes a plurality of second sub-blocks 2121 sequentially distributed along the second direction Y. The plurality of first sub-blocks 2111 are set to have gradually increasing sizes in the first direction Z along a direction of the first sub-blocks 2111 leaving the second sub-blocks 2121 in the second direction Y. The plurality of second sub-blocks 2121 are set to have gradually increasing sizes in the first direction Z along a direction of the second sub-blocks 2121 leaving the first sub-blocks 2111 along the second direction Y. The plurality of first sub-blocks 2111 are in one-to-one correspondence to the plurality of second sub-blocks 2121, and each first sub-block 2111 has the same size along the first direction Z as a corresponding second sub-block 2121. Each first sub-block 2111 of the two sets of limiting assemblies 21 encloses a limiting space 201 together with a corresponding second sub-block 2121, as well as the third limiting member 213 and the fourth limiting member 214. Therefore, the plurality of limiting spaces 201 are sequentially arranged in communication along the first direction Z, and a plurality of limiting spaces 201 have gradually increasing sizes in the second direction Y along a direction of the limiting structure 20 leaving the bottom support 10 in the first direction Z.

Based on this, the limiting structure 20 can be used to limit batteries of different models with different sizes in the second direction Y. When batteries are limited in the limiting spaces 201, the first limiting member 211 and the second limiting member 212 of the two sets of limiting assemblies 21 both limit the batteries along the second direction Y, and the third limiting member 213 and the fourth limiting member 214 of the two sets of limiting assemblies 21 both limit the batteries along the third direction X.

In addition, the first limiting member 211 and the third limiting member 213 of each set of limiting assemblies 21 are connected to form an L-shaped structure, and the second limiting member 212 and the fourth limiting member 214 are also connected to form an L-shaped structure. Therefore, the two sets of limiting assemblies 21 form a total of four L-shaped structures, and the four L-shaped structures are located at the four vertices of the square space. The length and width directions of the square space are the second direction Y and the third direction X, respectively.

The foregoing descriptions are merely optional embodiments of this application, but are not intended to limit this application. Persons skilled in the art understand that this application may have various modifications and variations. Any modification, equivalent replacement, and improvement made without departing from the spirit and principle of this application shall fall within the scope of claims of this application.

## Claims

1. A pallet (100), comprising:
a bottom support (10); and
a limiting structure (20) disposed on the bottom support (10) and enclosing a plurality of limiting spaces (201); wherein the limiting spaces (201) are located on a side of the bottom support (10) in a first direction (Z) and are used for limiting workpieces; and the plurality of limiting spaces (201) have different projections in the first direction (Z).

2. The pallet (100) according to claim 1, wherein at least some of the limiting spaces (201) are located on a same side of the bottom support (10) in the first direction (Z) and projections in the first direction (Z) partially overlap.

3. The pallet (100) according to claim 2, wherein the plurality of limiting spaces (201) are sequentially arranged in communication along the first direction (Z).

4. The pallet (100) according to claim 2, wherein at least two of the limiting spaces (201) partially overlap in a cross section parallel to the first direction (Z).

5. The pallet (100) according to any one of claims 1 to 4, wherein two of the limiting spaces (201) are respectively a first limiting space (201a) and a second limiting space (201b); in a second direction (Y), size of the first limiting space (201a) is smaller than size of the second limiting space (201b); and the second direction (Y) intersects with the first direction (Z).

6. The pallet (100) according to claim 5, wherein in a third direction (X), size of the first limiting space (201a) is smaller than size of the second limiting space (201b); and the third direction (X) intersects with both the first direction (Z) and the second direction (Y), and the first direction (Z), the second direction (Y), and the third direction (X) are all not in a same plane.

7. The pallet (100) according to any one of claims 1 to 6, wherein the limiting structure (20) comprises at least one set of limiting assemblies (21), and the limiting assemblies (21) comprise a first limiting member (211) and a second limiting member (212) spaced apart on the bottom support (10) along the second direction (Y), and a third limiting member (213) and a fourth limiting member (214) spaced apart on the bottom support (10) along the third direction (X), wherein the first limiting member (211), the second limiting member (212), the third limiting member (213), and the fourth limiting member (214) enclose the plurality of limiting spaces (201); and the first direction (Z) intersects with the second direction (Y), the first direction (Z) intersects with the third direction (X), the second direction (Y) intersects with the third direction (X), and the first direction (Z), the second direction (Y), and the third direction (X) are not all located in a same plane.

8. The pallet (100) according to claim 7, wherein the first limiting member (211) comprises a plurality of first sub-blocks (2111) disposed sequentially along the second direction (Y), and in a direction of the first sub-blocks (2111) leaving the second limiting member (212) in the second direction (Y), the plurality of first sub-blocks (2111) have gradually increasing sizes in the first direction (Z); and each of the first sub-blocks (2111) is used to enclose the limiting space (201) together with the second limiting member (211), and the limiting spaces (201) corresponding to the plurality of first sub-blocks (2111) are sequentially arranged in communication along the first direction (Z).

9. The pallet (100) according to claim 8, wherein the plurality of first sub-blocks (2111) are spaced apart along the second direction (Y); or the plurality of first sub-blocks (2111) are sequentially connected along the second direction (Y) to form a stepped structure.

10. The pallet (100) according to claim 8 or 9, wherein the second limiting member (212) comprises a plurality of second sub-blocks (2121) distributed sequentially along the second direction (Y), wherein in a direction of the second sub-blocks (2121) leaving the first sub-blocks (2111) along the second direction (Y), the plurality of second sub-blocks (2121) have gradually increasing sizes in the first direction (Z), and each of the second sub-blocks (2121) is used to enclose the limiting space (201) together with the corresponding first sub-block (2111).

11. The pallet (100) according to claim 10, wherein the plurality of second sub-blocks (2121) are spaced apart along the second direction (Y); or the plurality of second sub-blocks (2121) are sequentially connected along the second direction (Y) to form a stepped structure.

12. The pallet (100) according to any one of claims 8 to 11, wherein the third limiting member (213) comprises a plurality of third sub-blocks (2131) sequentially distributed along the third direction (X), wherein in a direction of the third sub-blocks (2131) leaving the fourth limiting member (214) in the third direction (X), the plurality of third sub-blocks (2131) have gradually increasing sizes in the first direction (Z); and each of the third sub-blocks (2131) is used to enclose the limiting space (201) together with the fourth limiting member (214), and the limiting spaces (201) corresponding to the plurality of third sub-blocks (2131) are sequentially arranged in communication along the first direction (Z).

13. The pallet (100) according to claim 12, wherein the plurality of third sub-blocks (2131) are spaced apart along the third direction (X); or the plurality of third sub-blocks (213) are sequentially connected along the third direction (X) to form a stepped structure.

14. The pallet (100) according to claim 12 or 13, wherein the fourth limiting member (214) comprises a plurality of fourth sub-blocks (2141) distributed sequentially along the third direction (X), wherein in a direction of the fourth sub-blocks (2141) leaving the third sub-blocks (2131) in the third direction (X), the plurality of fourth sub-blocks (2141) have gradually increasing sizes in the first direction (Z), and each of the fourth sub-blocks (2141) is used to enclose the limiting space (201) together with the corresponding third sub-block (2131).

15. The pallet (100) according to claim 14, wherein the plurality of fourth sub-blocks (2141) are spaced apart along the third direction (X); or the plurality of fourth sub-blocks (2141) are sequentially connected along the third direction (X) to form a stepped structure.

16. The pallet (100) according to any one of claims 12 to 15, wherein at least one of the limiting spaces (201) is enclosed by the first sub-block (2111), the second limiting member (212), the third sub-block (2131), and the fourth limiting member (214).

17. The pallet (100) according to claim 16, wherein the first sub-blocks (2111) enclose the limiting spaces (201) collectively with the third sub-blocks (2131), the second limiting members (212), and the fourth limiting members (214).

18. The pallet (100) according to claim 16, wherein the plurality of first sub-blocks (2111) each enclose the limiting space (201) together with a same third sub-block (2131).

19. The pallet (100) according to any one of claims 12 to 15, wherein at least one of the limiting spaces (201) corresponding to the first sub-blocks (2111) and any one of the limiting spaces (201) corresponding to the third sub-blocks (2131) are different limiting spaces (201).

20. The pallet (100) according to claim 19, wherein the limiting assembly (21) further comprises a fifth limiting member (215) disposed between the first sub-block (2111) and the third sub-block (2131) and a sixth limiting member (216) disposed between the second limiting member (212) and the fourth limiting member (214); wherein the fifth limiting member (215) and the sixth limiting member (216) are configured to enclose the limiting spaces (201) together with the first sub-block (2111) and the second limiting member (212) and are further configured to enclose the limiting spaces (201) together with the third sub-block (2131) and the fourth limiting member (214).

21. The pallet (100) according to any one of claims 7 to 20, wherein the limiting structure (20) further comprises a supporting member (22) disposed on the bottom support (10), and the supporting member (22) is configured to support the workpiece along the first direction (Z).

22. The pallet (100) according to any one of claims 7 to 21, wherein the first limiting member (211), the second limiting member (212), the third limiting member (213), and the fourth limiting member (214) are sequentially connected along the first direction (Z); or
the first limiting member (211) is connected to the third limiting member (213) and/or the second limiting member (212) is connected to the fourth limiting member (214).

23. The pallet (100) according to any one of claims 7 to 22, wherein the first limiting member (211) is provided with an avoidance groove (202) on a side facing the second limiting member (212) in the second direction (Y), and the second limiting member (212) is provided with an avoidance groove (202) on a side facing the first limiting member (211) in the second direction (Y); or
the third limiting member (213) is provided with an avoidance groove (202) on a side facing the fourth limiting member (214) along the third direction (X), and the fourth limiting member (214) is provided with an avoidance groove (202) on a side facing the third limiting member (213) along the third direction (X).

24. The pallet (100) according to any one of claims 1 to 23, wherein the limiting structure (20) is a flexible material member and/or an elastic material member.

25. A battery processing device (1000), comprising the pallet (100) according to any one of claims 1 to 24.

26. A battery production line, comprising the battery processing device (1000) according to claim 25.
